# EUROPEAN PATENT SPECIFICATION

(11) **EP 4 184 988 B1**
(45) Date of publication and mention of the grant of the patent: **28.10.2026**
(21) Application number: 21855399.8
(22) Date of filing: 02.08.2021
(51) Int. Cl.: H04W 48/18, H04L 65/1063, H04W 24/02

(54) **NETWORK SLICING MANAGEMENT SYSTEM, APPLICATION SERVER AND TERMINAL DEVICE**
NETZWERK-SLICING-VERWALTUNGSSYSTEM, ANWENDUNGSSERVER UND ENDGERÄTEVORRICHTUNG
SYSTÈME DE GESTION DE TRANCHAGE DE RÉSEAU, SERVEUR D'APPLICATION ET DISPOSITIF DE TERMINAL

(30) Priority: 11.08.2020 CN 202010802291
(43) Date of publication of application: 24.05.2023
(73) Proprietor: Huawei Technologies Co., Ltd., Shenzhen, Guangdong 518129 (CN)
(72) Inventor: LIU, Binjun, Shenzhen, Guangdong 518129 (CN); YU, Xiaoliang, Shenzhen, Guangdong 518129 (CN)
(74) Representative: Grünecker Patent- und Rechtsanwälte PartG mbB
(86) International application number: PCT/CN2021/110030
(87) International publication number: WO 2022/033346

(56) References cited:
- CN-A- 110 391 926
- CN-A- 110 881 199
- US-B1- 10 602 422
- US-B1- 10 602 422
- HUAWEI ET AL: "Correction for URSP rule parameter traffic descriptor", vol. SA WG2, 29 November 2018 (2018-11-29), XP051490635, Retrieved from the Internet <URL:http://www.3gpp.org/ftp/tsg%5Fsa/WG2%5FArch/TSGS2%5F129BIS%5FWest%5FPalm%5FBeach/Docs/S2%2D1813003%2Ezip> [retrieved on 20181129]
- "3rd Generation Partnership Project; Technical Specification Group Services and System Aspects; Procedures for the 5G System (5GS); Stage 2 (Release 16)", vol. SA WG2, no. V16.4.0, 27 March 2020 (2020-03-27), pages 1 - 582, XP051861092, Retrieved from the Internet <URL:ftp://ftp.3gpp.org/Specs/archive/23_series/23.502/23502-g40.zip 23502-g40.docx> [retrieved on 20200327]
- PAN ZHIWEI: "The Method of Resource Dynamic Adjustment in Network Slice Based on SDN", RUANJIAN = SOFTWARE MAGAZINE, ZHONGGUO DIANZI XUEHUI, TIANJIN, CN, vol. 38, no. 12, 15 December 2017 (2017-12-15), Tianjin, CN , pages 136 - 142, XP055900671, ISSN: 1003-6970, DOI: 10.3969/j.issn.1003-6970.2017.12.026

## Description

### TECHNICAL FIELD

This application relates to the field of communications technologies, and in particular, to a network slice management system, an application server, and a terminal device.

### BACKGROUND

A 5th generation mobile communications system (5G communications system for short) includes a plurality of network slices (network slices, NSs), and each network slice may simultaneously provide different service bearer capabilities for different applications, to improve flexibility and service adaptability of the 5G communications system.

An operator of the 5G communications system may provide a network slice service for a user in a 2B2C mode. The 2B2C mode means that the operator provides the network slice service for an application vendor, and the application vendor allocates the network slice service to an application account for use by a user. Due to a limitation of network slice resources, a quantity of application accounts that can be simultaneously accessed to a network slice is limited. For example, a maximum of 1,000 application accounts can be simultaneously accessed. Therefore, the application vendor needs to allocate the network slice resources to each application account according to a specific rule.

Currently, a network slice resource allocation method is to fixedly allocate the network slice resources to some application accounts, for example, a VIP account. However, if the application accounts that occupy the network slice resources get offline, the network slice resources occupied by the application accounts are idle, causing waste of the network slice resources.

From US 10 602 422 B1, an application based user equipment route selection policy mapping is known. The document HUAWEI ET AL: "Correction for URSP rule parameter traffic descriptor", 3GPP DRAFT; S2-1813003_WAS12162_ WAS11409_WAS11257_WAS10524_23503_UR, SP TRAFFIC DESCRIPTOR_6, 3RD GENERATION PARTNERSHIP PROJECT (3GPP), MOBILE COMPETENCE CENTRE; 650, ROUTE DES LUCIOLES: F-06921 SOPH, vol. SA WG2 29 November 2018 (2018-11-29), XP051490635 shows a proposal for the correction for a URSP rule parameter traffic descriptor. From "3rd Generation Partnership Project; Technical Specification Group Services and System Aspects; Procedures for the 5G System (5GS); Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE; 650, ROUTE DES LUCIOLES; F-06921, SOPHIA-ANTIPOLIS CEDEX; FRANCE, vol. SA WG2, no. V16.4.0 27 March 2020 (2020-03-27), pages 1-582, XP051861092, a technical specification for the 3GPP standard is known.

### SUMMARY

The invention is defined according to the independent claims. The dependent claims describe advantageous embodiments of the invention.

### BRIEF DESCRIPTION OF DRAWINGS

FIG. 1 is a schematic block diagram of an architecture of a 5G communications system according to an embodiment of this application;
FIG. 2 is a schematic diagram of an application scenario for a network slice according to an embodiment of this application;
FIG. 3 is a schematic flowchart 1 of a network slice management method according to an embodiment of this application;
FIG. 4 is a schematic diagram of a communication link between an application and an application server according to an embodiment of this application;
FIG. 5 is a schematic flowchart 2 of a network slice management method according to an embodiment of this application;
FIG. 6 is a schematic flowchart 3 of a network slice management method according to an embodiment of this application;
FIG. 7 is a schematic flowchart 4 of a network slice management method according to an embodiment of this application;
FIG. 8 is a schematic flowchart 5 of a network slice management method which does not form part of the invention as defined by the appended claims;
FIG. 9 is a schematic flowchart 6 of a network slice management method which does not form part of the invention as defined by the appended claims;
FIG. 10 is a schematic flowchart 7 of a network slice management method which does not form part of the invention as defined by the appended claims;
FIG. 11 is a schematic flowchart 8 of a network slice management method which does not form part of the invention as defined by the appended claims;
FIG. 12 is a schematic flowchart 9 of a network slice management method which does not form part of the invention as defined by the appended claims;
FIG. 13 is a schematic flowchart of a method for sending a URSP according to an embodiment of this application;
FIG. 14 is a schematic flowchart of a method for deleting a URSP according to an embodiment of this application;
FIG. 15 is a schematic diagram of a structure of a terminal device according to an embodiment of this application;
FIG. 16 is a schematic diagram of another procedure for sending a URSP according to an embodiment of this application;
FIG. 17 is a schematic diagram of a method for using a first network slice according to an embodiment of this application;
FIG. 18 is a schematic flowchart 1 of a method for switching a network slice according to an embodiment of this application;
FIG. 19 is a schematic flowchart 2 of a method for switching a network slice according to an embodiment of this application; and
FIG. 20 is a schematic flowchart 3 of a method for switching a network slice according to an embodiment of this application.

### DESCRIPTION OF EMBODIMENTS

Embodiments of this application provide a network slice management method, to dynamically adjust a range of application accounts that use a network slice of an application. The method is applicable to a 5G communications system, a communications system above 5G, a future evolved public land mobile network (public land mobile network, PLMN), and a subsequent communications system that supports a 3rd generation partnership project (3rd generation partnership project, 3GPP) protocol version. This is not limited in embodiments of this application.

The following describes the network slice management method provided in embodiments of this application by using the 5G communications system as an example.

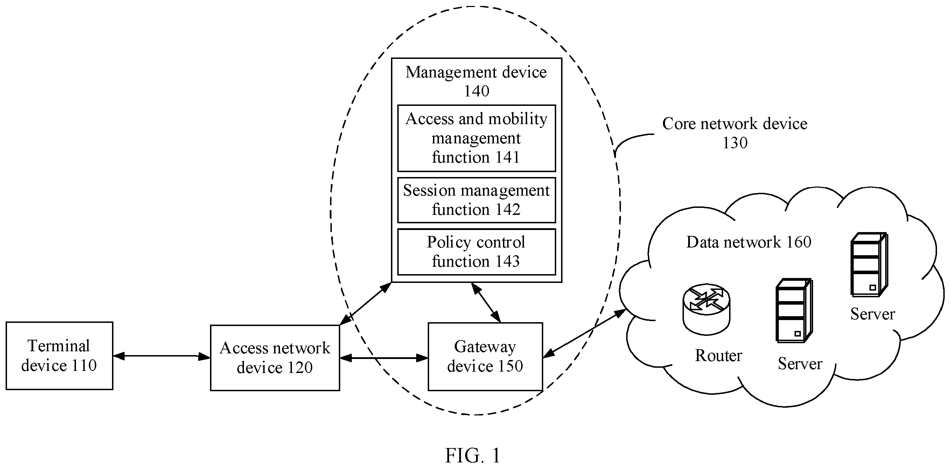

FIG. 1 is a schematic block diagram of an architecture of a 5G communications system according to an embodiment of this application. As shown in FIG. 1, the 5G communications system includes a terminal device 110, an access network device 120, a core network device 130, and a data network (data network, DN) 160.

The terminal device 110 may be connected, through a radio air interface, to the access network device 120 deployed by an operator, and then connected to the data network 160 by using the core network device 130. In this embodiment, the terminal device 110 may be user equipment (user equipment, UE), for example, a smartphone, a tablet computer, a notebook computer, an intelligent wearable device, or a personal digital assistant (personal digital assistant, PDA).

The access network device 120 is mainly configured to implement functions such as a radio physical layer function, resource scheduling and radio resource management, radio access control, and mobility management. In this embodiment, the access network device may be an access network (access network, AN) device or a radio access network (radio access network, RAN) device.

The core network device 130 includes a management device 140 and a gateway device 150. The management device 140 may include functional units such as an access and mobility management function (access & mobility function, AMF) 141, a session management function (session management function, SMF) 142, and a policy control function (policy control function, PCF) 143. These functional units may work independently or may be combined to implement some control functions. For example, the AMF, the SMF, and the PCF may work together to complete access control and mobility management functions such as access authentication, security encryption, and location registration of a terminal device, session management functions such as establishment, release, and change of a user plane transmission path, and functions of analyzing some data related to a network slice and data related to a terminal device. The gateway device 150 is mainly configured to establish a channel with a terminal device, and forward a data packet between the terminal device and an external data network on the channel.

The data network 160 may correspond to a plurality of different service domains, for example, an IP multimedia subsystem (IP multimedia subsystem, IMS), an internet (Internet), and a service domain related to a third-party application, and is mainly configured to provide a plurality of data service services for a terminal device. The data network 160 may include network devices such as a server (for example, a third-party application server), a router, and a gateway.

It should be noted that FIG. 1 is merely a diagram of an example architecture of the 5G communications system. In addition to the functional units shown in FIG. 1, a network architecture of the 5G communications system may further include another functional unit or functional entity. This is not limited in this embodiment.

The 5G communications system includes a plurality of network slices. The network slice is a logical network formed by combining related service functions, network resources, and network configurations in a physical network, and can meet a specific service requirement (for example, a latency, jitter, a packet loss rate, and bandwidth in a specific range). By using network slicing, the 5G communications system can provide different service bearer capabilities for different applications (such as a game application and a chat application), to improve flexibility, service adaptability, and resource utilization of the 5G network architecture.

An application vendor (namely, a provider of an application) subscribes to a network slice service with an operator of the 5G communications system, so that the application can exchange data with an application server by using a network slice, to improve smoothness of running the application in a terminal device and improve user experience.

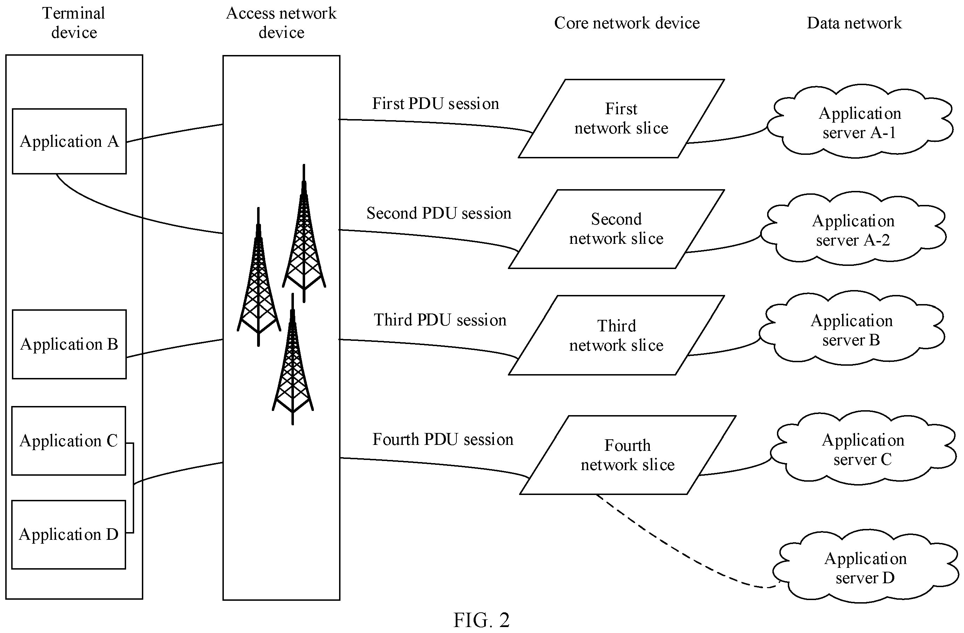

FIG. 2 is a schematic diagram of an application scenario for a network slice according to an embodiment of this application. Refer to FIG. 2. An application installed in a terminal device may be connected to a corresponding application server by using a network slice.

In a process of running the application, the terminal device usually needs to log in to an application server by using the application and an application account, to communicate with the application server. Specifically, in the process of running the application, the terminal device first establishes a protocol data unit (protocol data unit, PDU) session for a network slice corresponding to the application, and then communicates with the application server by using the PDU session, to transmit information related to the application account.

It should be noted that a network slice used by each application in the terminal device is determined based on a network slice service to which an application vendor subscribes with an operator. A correspondence between each application and the network slice may include the following (1) to (3).

(1) Different applications are connected to different application servers by using different network slices. For example, as shown in FIG. 2, an application A is connected to an application server A-1 by using a first network slice, and an application B is connected to an application server B by using a third network slice.

(2) A same application is connected to different application servers by using different network slices. For example, as shown in FIG. 2, the application A may be connected to the application server A-1 by using the first network slice, or may be connected to an application server A-2 by using a second network slice.

(3) Different applications are connected to different application servers by using a same network slice. For example, as shown in FIG. 2, an application C may be connected to an application server C by using a fourth network slice. An application D may also be connected to an application server D by using the fourth network slice.

Business models for providing a network slice by the operator include a 2B2C mode, a 2B mode, a 2C mode, and the like. In the 2B2C mode, the operator sells the network slice service to the application vendor (for example, a game vendor), and the application vendor allocates the network slice service to an application account for use by a user (for example, a game player). In the 2B mode, the operator directly sells the network slice service to a merchant (for example, a logistics company) for use. In the 2C mode, the operator directly sells the network slice service to a user.

In the foregoing business models, when subscribing to the network slice service with the operator, the application vendor negotiates with the operator to determine a quality of service rule (quality of service rule, QoS rule). The QoS rule specifies basic parameters such as bandwidth, a latency, and a packet loss rate for data transmission of a subscribed network slice. After the QoS rule is determined, a core network device of the operator generates a UE route selection policy (UE route selection policy, URSP).

The URSP includes a traffic descriptor (traffic descriptor) and a route selection descriptor (route selection descriptor). The traffic descriptor is used to describe a feature of traffic transmitted by the terminal device, and may include any one of parameters such as an application identifier (application identifier, App ID), a destination internet protocol (internet protocol, IP) address, a destination port (Port), a fully qualified domain name (fully qualified domain name, FQDN) of an access destination, and a data network name (data network name, DNN). The route selection descriptor is used to describe a parameter for activating a PDU session with a network slice by the terminal device, and may include parameters such as a DNN, network slice selection assistance information (network slice selection assistance information, NSSAI), or a protocol type for data transmission. For example, the protocol type may be a transmission control protocol (transmission control protocol, TCP), a user datagram protocol (user datagram protocol, UDP), or the like.

The URSP is used by the terminal device to select a corresponding network slice. Specifically, the terminal device locally maintains a URSP list, and the URSP list stores URSPs corresponding to different applications. For example, refer to Table 1. The URSP list may include a plurality of URSPs of the application A, such as a URSP-A1 and a URSP-A2, or may include a plurality of URSPs of the application B, such as a URSP-B 1 and a URSP-B2. In addition, the URSP list further includes at least a default URSP (namely, Default URSP) of a default network slice. In the default URSP, a traffic descriptor of the default URSP is match all, and each application may use the default network slice.

**Table 1 URSP list-1**

| |
|---|
| URSP-A1 |
| URSP-A2 |
| URSP-B1 |
| URSP-B2 |
| ... |
| Default URSP |

When using a network slice, the terminal device traverses the URSP list to search for a matched URSP, and uses the network slice based on the URSP. It may be understood that, only when the URSP list of the terminal device stores a URSP of an application, the terminal device can use a network slice of the application based on the URSP, to communicate with a corresponding application server. For example, only when the URSP list stores the URSP (namely, the URSP-B1 or the URSP-B2) of the application B, the terminal device can use the third network slice to communicate with the application server B in a process of running the application B.

It may be understood that because a terminal device logs in to an application server based on an application and an application account, when the terminal device can use a network slice of the application, it indicates that the application account associated with the terminal device can use the network slice of the application.

In some embodiments, the application may be installed in different terminal devices, and all these terminal devices may log in to the application server of the application at different time periods by using the application account. Therefore, the terminal device mentioned in this embodiment refers to a terminal device that logs in to the application server by using the application account. In other words, whenever the application account is online, the terminal device may be the same or may be different.

In this embodiment, the application account is used to uniquely identify an account of an application, and may be a registered mobile phone number, a registered email address, a registered identity card number, a user identification (identification, ID) allocated by the application server, or the like of the account. This is not limited in this embodiment of this application. The application server stores all application accounts of the application and local related information (for example, a member level) of each application account. Different application accounts may have different member levels. For example, some application accounts are common members, and some application accounts are VIP members.

In the 2B2C business model, due to a limitation of network slice service resources, a quantity of application accounts that can be simultaneously accessed to a network slice of an application is limited. For example, a maximum of 1,000 application accounts can be simultaneously accessed. Therefore, the application server needs to allocate the network slice resources to each application account according to a specific rule. Currently, a possible allocation method is to fixedly allocate the network slice resources to some application accounts, for example, a VIP account, based on locally stored related information of an application account. However, after an application account (namely, a slice account) that occupies network slice resources gets offline, some network slice resources occupied by the application account are idle, causing waste of the network slice resources.

In view of this, embodiments of this application provide a network slice management method, to improve utilization of network slice resources by dynamically adjusting a range of slice accounts. The network slice management method in embodiments of this application is applicable to a scenario in which an application account is connected to an application server by using a cellular data network.

In embodiments, after an application vendor subscribes to a network slice service with an operator, a core network device may send a URSP of an application to the application server, so that the application server manages a range of slice accounts of the application based on the URSP. In addition, the core network device may also locally store the URSP, and manage a range of the application/slice accounts that use a network slice of the application based on a request of the application server.

The following describes a method for managing the network slice of the application by using an example in which an application is installed in a terminal device and the application and an application account of the application are used to communicate with the application server.

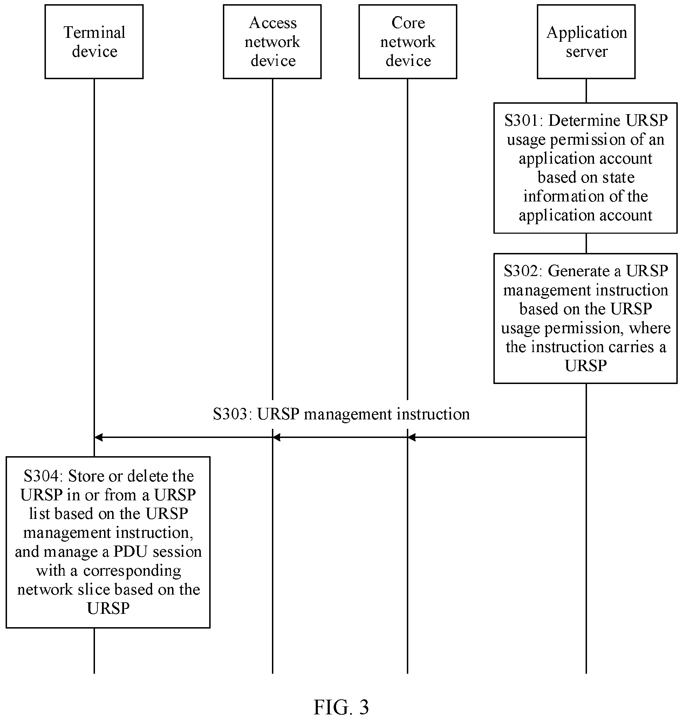

FIG. 3 is a schematic flowchart 1 of the network slice management method according to an embodiment of this application. The method can directly manage a range of slice accounts of the application by using the application server, and specifically includes the following steps.

S301: The application server determines URSP usage permission of the application account based on state information of the application account.

In this embodiment, the state information of the application account includes first state information and second state information. The first state information may be online information sent by the terminal device, network quality information, or the like. The second state information may be offline request information sent by the terminal device, or priority information determined by the application server based on local related information (for example, member information) of the application account, or the like.

After determining the state information of the application account, the application server may determine the URSP usage permission of the application account based on the state information. The URSP permission includes available permission and unavailable permission.

S302: The application server determines a URSP management instruction based on the URSP usage permission, where the URSP management instruction carries a URSP of the application.

The application server may generate the URSP management instruction based on the URSP usage permission and a locally stored URSP of the application. In this embodiment, the URSP management instruction includes a URSP delivery instruction and a URSP deletion instruction.

If the URSP usage permission of the application account is the available permission, the URSP management instruction is the URSP delivery instruction, and the instruction carries the URSP of the application. The URSP delivery instruction instructs the terminal device to store the URSP in a URSP list.

If the URSP usage permission of the application account is the unavailable permission, the URSP management instruction is the URSP deletion instruction, and the URSP deletion instruction carries the URSP of the application. The URSP deletion instruction instructs the terminal device to delete the URSP prestored in a URSP list.

S303: The application server sends the URSP management instruction to the terminal device.

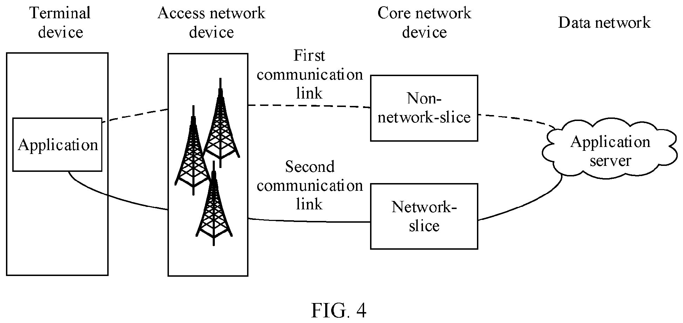

When the application server sends the URSP management instruction to the terminal device, the terminal device cannot communicate with the application server by using the network slice of the application, a communication link between the terminal device and the application server is a non-network-slice communication link (for example, a first communication link in FIG. 4). Therefore, the application server sends the URSP delivery instruction to the terminal device by using the non-network-slice communication link.

However, after the terminal device obtains the URSP, the terminal device can establish, based on the URSP, a connection to the application server by using a network slice corresponding to the application, to form a network-slice communication link (for example, a second communication link shown in FIG. 4). Therefore, the application server sends the URSP deletion instruction to the terminal device by using the network-slice communication link.

S304: The terminal device stores or deletes the URSP in or from the local URSP list based on the URSP management instruction, and manages a PDU session with a corresponding network slice based on the URSP.

In this embodiment, after receiving the URSP delivery instruction, the terminal device stores the URSP carried in the instruction in the URSP list. Afterwards, the terminal device may activate a PDU session with the network slice of the application based on the URSP, to communicate with the application server.

If the URSP list currently stored in the terminal device is Table 1 and the URSP carried in the URSP delivery instruction received by the terminal device is a URSP-C, the terminal device stores the URSP-C in the local URSP list (namely, Table 1), to form a URSP list shown in Table 2. Then, in a process of running an application C, the terminal device may activate a PDU session with a network slice of the application C based on the URSP-C in the list, to use the network slice to communicate with the application server C.

**Table 2 URSP list-2**

| |
|---|
| URSP-A1 |
| URSP-A2 |
| URSP-B1 |
| URSP-B2 |
| URSP-C |
| ... |
| Default URSP |

After receiving the URSP deletion instruction, the terminal device deletes, based on the URSP carried in the instruction, the URSP prestored in the URSP list, and deactivates the PDU session established based on the URSP, to stop using the network slice of the application to communicate with the application server.

For example, if the URSP list currently stored in the terminal device is Table 2, and the URSP carried in the URSP deletion instruction received by the terminal device is URSP-C, the terminal device deletes the URSP-C from Table 2, and deactivates the PDU session established based on the URSP-C, to stop using the network slice of the application C to communicate with the application server C. A URSP list obtained after the URSP-C is deleted is shown in Table 1, and details are not described herein in this embodiment.

It may be understood that, when the terminal device runs the application based on the application account, the terminal device has established a communication link with the application server. Therefore, the application server may directly send the URSP management instruction to the application by using the communication link management. After receiving the URSP management instruction, the application sends the instruction to an application framework layer (framework, FWK) of the terminal device through a software interface between the application and the terminal device. The application framework layer controls activation or deactivation of the PDU session based on the URSP management instruction.

It should be noted that whether an application account can use a network slice of an application to which the application account belongs is limited by whether a terminal device associated with the application account can use the network slice. In other words, the application account can use the network slice only when the terminal device can use the network slice. When the terminal device cannot use the network slice, the application account cannot use the network slice either.

Therefore, according to the network slice management method provided in this embodiment of this application, the application server can manage whether the terminal device associated with the application account can use the network slice, to control whether the application account can use the network slice and dynamically adjust a range of application accounts that use the network slice of the application, so as to resolve a problem of waste of network slice resources of the application to some extent and improve utilization of the network slice resources.

The following describes the network slice management method provided in embodiments of this application with reference to specific embodiments.

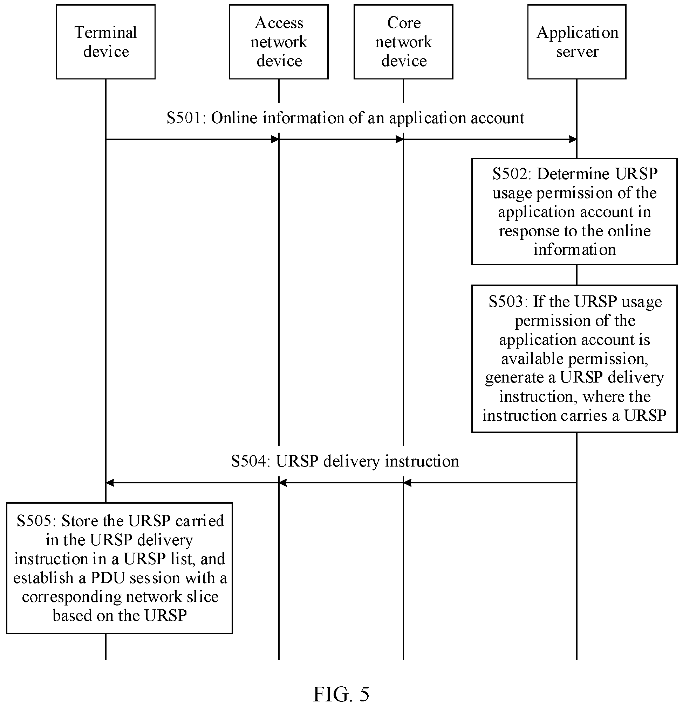

FIG. 5 is a schematic flowchart 2 of the network slice management method according to an embodiment of this application. The method is used to control an online application account to use a network slice of an application to which the online application account belongs. The method specifically includes the following steps.

S501: The terminal device sends online information of the application account to the application server.

In this embodiment, as shown in FIG. 4, the terminal device may send the online information to the application server based on the first communication link and sequentially by using an access network device and the core network device. The online information may be a login request of the application account, or may be a login success indication message of the application account.

S502: The application server determines URSP usage permission of the application account in response to the online information.

In response to the online information, the application server may determine the URSP usage permission of the application account by using any one of the following permission determining rules (1) to (3).

(1) When a quantity of slice accounts is less than N, the application server determines the URSP usage permission of the online application account as available permission. N is a maximum quantity of application accounts that can access the network slice of the application.

(2) When a quantity of slice accounts is less than N, if the application account is a VIP account, the application server determines the URSP usage permission of the application account as available permission.

(3) When a quantity of slice accounts is less than N, if the application account ranks top N in priorities of online application accounts, the application server determines the URSP usage permission of the application account as available permission. A priority of the application account may be determined based on a member level. For example, when the member level includes a diamond member, a VIP member, and an ordinary member, priorities of the diamond member, VIP member, and ordinary member are in a descending order.

S503: If the URSP usage permission of the application account is the available permission, the application server generates a URSP delivery instruction, where the instruction carries a URSP of the application.

S504: The application server sends the URSP delivery instruction to the terminal device.

An application A and an application server A-1 are used as an example. The application server A-1 maintains a slice account list, and the list records an application account that has currently obtained a URSP of the application A. For example, the slice account list may be shown in Table 3, and the application account in the slice account list may include an account ID, a registered mobile phone number, and the like.

**Table 3 Slice account list**

| Sequence number | Application account | |
|---|---|---|
| | Account ID | Registered mobile phone number |
| 1 | WX-00101259 | 158xxxx2549 |
| 2 | WX-00507821 | 189xxxx6677 |
| 3 | WX-00603358 | 152xxxx2333 |
| 4 | WX-00806670 | 135xxxx5869 |
| 5 | WX-00409915 | 187xxxx1123 |
| ... | ... | ... |
| 999 | (Null) | (Null) |
| 1000 | (Null) | (Null) |

In some embodiments, to avoid repeatedly sending a URSP to a same application account, when sending the URSP delivery instruction to the terminal device, the application server may first detect whether the slice account list includes the application account. If the slice account list includes the application account, the URSP delivery instruction is not sent. If the slice account list does not include the application account, the application server sends the URSP delivery instruction to the terminal device. After the URSP delivery instruction is successfully sent, the application server adds the application account to the slice account list.

S505: The terminal device stores the URSP in a URSP list based on the URSP delivery instruction, and establishes a PDU session with a corresponding network slice based on the URSP.

According to the network slice management method provided in this embodiment, the application server can send the URSP to the terminal device based on the online information of the application account, to control the terminal device to use the network slice of the application to which the application account belongs, so that the application account is controlled to use the network slice, to improve utilization of network slice resources.

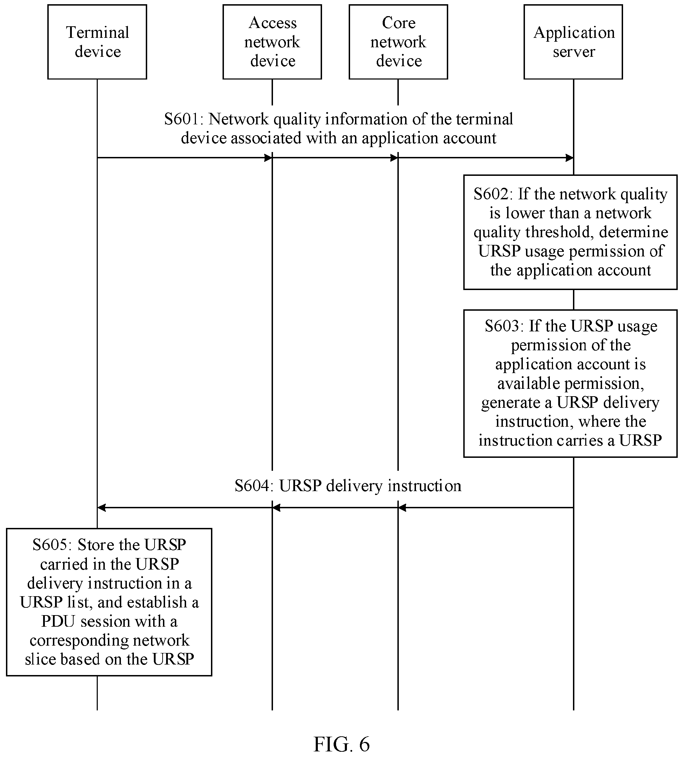

FIG. 6 is a schematic flowchart 3 of the network slice management method according to an embodiment of this application. The method is used to control an application account with low network quality to use a network slice of an application to which the application account belongs. The method specifically includes the following steps.

S601: The terminal device sends network quality information of the terminal device to the application server, where the terminal device is associated with the application account.

In this embodiment, as shown in FIG. 4, the terminal device may send the network quality information to the application server based on the first communication link and sequentially by using an access network device and the core network device.

In this embodiment, the network quality information is used to indicate quality of network transmission between the terminal device and the application server. For example, the network quality information may be a communication quality parameter (for example, a packet loss rate or a latency) of a downlink communication link of the terminal device, or may be a network quality level of the downlink communication link.

It should be noted that in a process of running the application, the terminal device can determine a network quality level based on parameters such as a latency, jitter, a packet loss rate, and bandwidth of data transmission related to the application. For example, the network quality levels in an ascending order may be: "very poor", "poor", "medium", "good", and "excellent". Certainly, the network quality level may alternatively be in another form, for example, may be a value between 1 and 100, which is not limited in this embodiment.

S602: If the network quality information is lower than a network quality threshold, the application server determines URSP usage permission of the application account.

When network quality is poor, during the running of the application, a screen may freeze or information may be refreshed slowly, affecting user experience. Therefore, after the application server receives the network quality information of the application account, if the network quality is lower than the network quality threshold (for example, a level of "medium"), the application server may determine the URSP usage permission of the application account based on a permission determining rule shown in the following (1) or (2).
(1) When a quantity of slice accounts is less than N, for an application account whose network quality information is lower than the network quality threshold, the application server may determine URSP usage permission of the application account as available permission.
(2) When a quantity of slice accounts is less than N, if network quality of an application account is lower than the network quality threshold, and a priority of the application account ranks top N, the application server determines URSP usage permission of the application account as available permission. Otherwise, URSP usage permission is unavailable permission.

S603: If the URSP usage permission of the application account is the available permission, the application server generates a URSP delivery instruction, where the instruction carries a URSP.

S604: The application server sends the URSP delivery instruction to the terminal device.

S605: The terminal device stores the URSP in a URSP list based on the URSP delivery instruction, and establishes a PDU session with a corresponding network slice based on the URSP.

For content of the steps S603 to S605, refer to the steps S503 to S505. Details are not described herein again in this embodiment.

According to the network slice management method provided in this embodiment, the application server can send the URSP to the terminal device based on the network quality information of the application account, to control the terminal device to use the network slice of the application to which the application account belongs, so that the application account is controlled to use the network slice, to improve utilization of network slice resources.

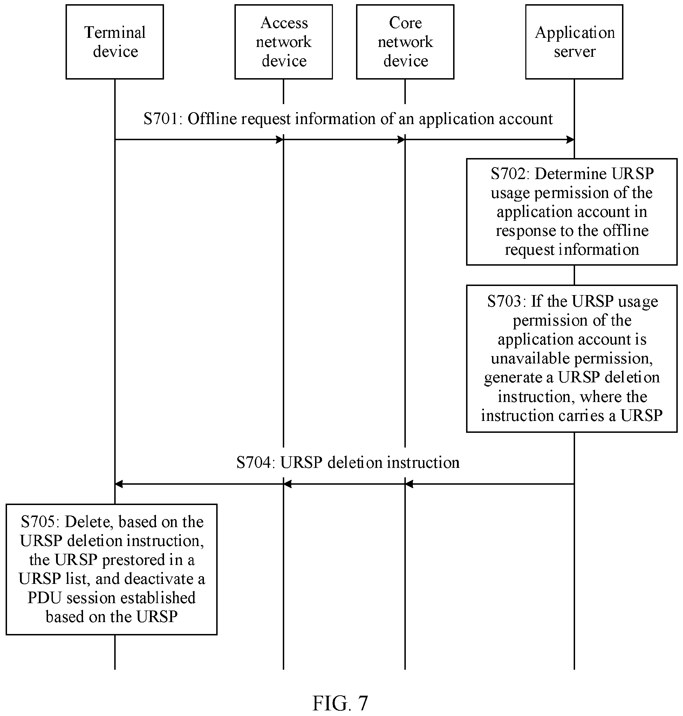

FIG. 7 is a schematic flowchart 4 of the network slice management method according to an embodiment of this application. The method is used to control an offline application account to stop using a network slice of an application to which the application account belongs. The method specifically includes the following steps.

S701: The terminal device sends offline request of the application account to the application server.

In this embodiment, as shown in FIG. 4, the terminal device may send the offline request to the application server based on the first communication link and sequentially by using an access network device and the core network device. The offline request is used to indicate that the application account requests to disconnect a connection between the terminal device and the application server, so as not to continue to transmit data between the terminal device and the application server.

S702: The application server determines URSP usage permission of the application account in response to the offline request information.

In response to the offline request, the application server may search a locally stored slice account list (for example, Table 3) for the application account. If the slice account list includes the application account, it is determined that the URSP usage permission of the application account is unavailable permission.

S703: If the URSP usage permission of the application account is the unavailable permission, the application server generates a URSP deletion instruction, where the URSP deletion instruction carries a URSP of the application.

S704: The application server sends the URSP deletion instruction to the terminal device.

After the application account with permission to use the network slice gets offline, a network slice resource originally occupied by the application account is idle, causing waste of the resource. Therefore, in response to the offline request information, the application server needs to cancel the permission to use the network slice by the application account.

In addition, after sending the URSP deletion instruction to the terminal device, the application server deletes the application account from the slice account list.

S705: The terminal device deletes, based on the URSP deletion instruction, the URSP prestored in a URSP list, and deactivates a PDU session established based on the URSP.

According to the network slice management method provided in this embodiment, the application server can control, based on the offline request information of the application account, the terminal device to stop using the network slice of the application to which the application account belongs, so that the offline application account stops using the network slice. According to the method, the network slice resource occupied by the application account can be reserved for another application account to use, to improve utilization of the network slice resource.

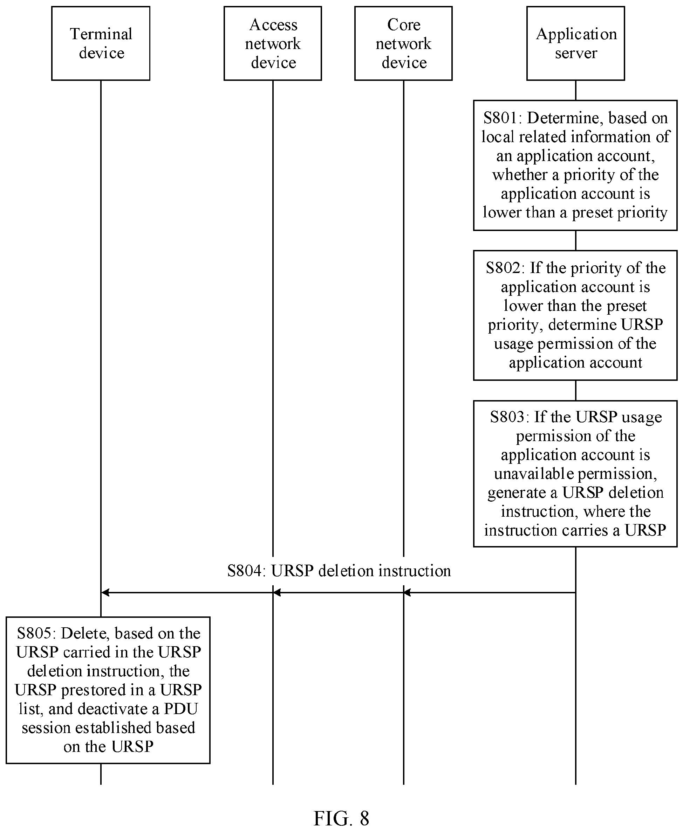

FIG. 8 is a schematic flowchart 5 of the network slice management method according to an embodiment of this application. The method is used to control an application account whose priority is lower than a preset priority to stop using a network slice of an application to which the application account belongs. The method specifically includes the following steps.

S801: The application server determines, based on local related information of the application account, whether the priority of the application account is lower than the preset priority.

In an example, the local related information of the application account may be a member level of the application account. If the member level of the application account changes from a VIP member to a common member, it is determined that the priority of the application account is lower than the preset priority.

S802: If the priority of the application account is lower than the preset priority, the application server determines URSP usage permission of the application account.

S803: If the URSP usage permission of the application account is unavailable permission, the application server generates a URSP deletion instruction, where the URSP deletion instruction carries a URSP of the application.

S804: The application server sends the URSP deletion instruction to the terminal device.

S805: The terminal device deletes, based on the URSP deletion instruction, the URSP prestored in a URSP list, and deactivates a PDU session established based on the URSP.

For specific content of the steps S802 to S805, refer to the steps S702 to S705. Details are not described herein again in this embodiment.

According to the network slice management method provided in this embodiment, the application server can control the terminal device to stop using the network slice, to control the application account with the lower priority to stop using the network slice, so that a corresponding network slice resource is reserved for another application account with a higher priority to use, to improve utilization of the network slice resource.

According to the network slice management method provided in this embodiment, the application server can control, based on state information of the application account, the terminal device to stop using the network slice of the application to which the application account belongs, so that the application account with the lower priority stops using the network slice. According to the method, the network slice resource occupied by the application account can be reserved for another application account to use, to improve utilization of the network slice resource.

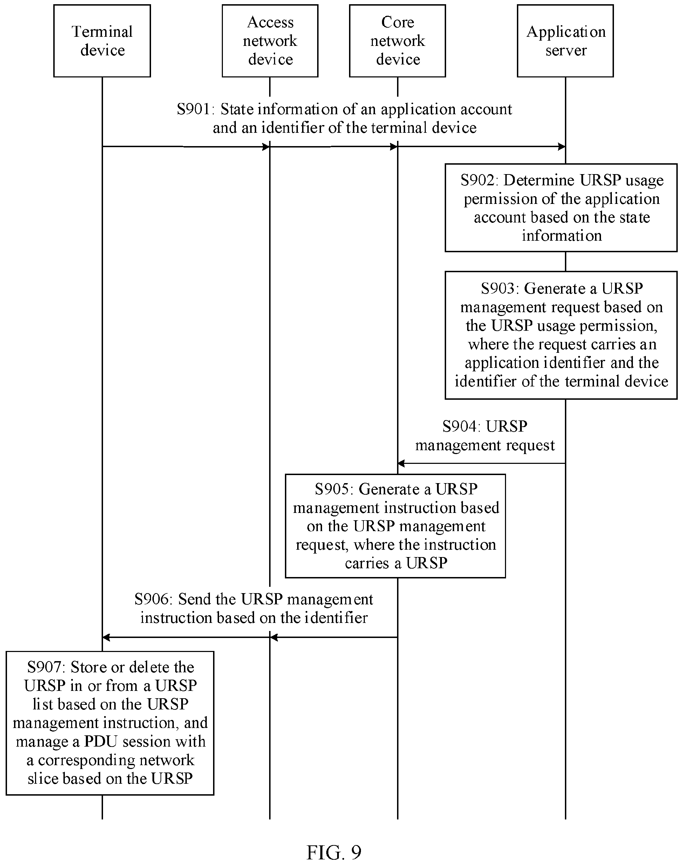

FIG. 9 is a schematic flowchart 6 of the network slice management method according to an embodiment of this application. The method is used by the application server to indirectly manage a range of slice accounts of a network slice by using the core network device, and specifically includes the following steps.

S901: The terminal device sends state information of an application account and an identifier of the terminal device to the application server.

The identifier of the terminal device is a phone number (which is referred to as a communication phone number in this application) or an international mobile subscriber identity (international mobile subscriber identification number, IMSI) corresponding to a subscriber identity module (subscriber identity module, SIM) card installed in the terminal device.

It should be noted that the communication phone number is a phone number for transmitting data between the terminal device and the core network. A registered phone number is a phone number bound to the application account during registration. The registered application account can be used to log in to different terminal devices. The registered phone number and communication phone number of the application account may be the same or different.

In this embodiment, the state information of the application account may include any one of the following: (1) online information; (2) network quality information; (3) offline request information.

S902: The application server determines URSP usage permission of the application account based on the state information of the application account.

For specific content of the step S902, refer to the step S301. Details are not described herein again in this embodiment.

S903: The application server generates a URSP management request based on the URSP usage permission, where the request carries an application identifier of an application and the identifier of the terminal device.

In this embodiment, the application server may generate the URSP management request based on the URSP usage permission, the application identifier, and the identifier. The URSP management request is a URSP delivery request or a URSP deletion request.

If the URSP usage permission of the application account is available permission, the URSP management request is the URSP delivery request, and the request carries the application identifier of the application and the identifier of the terminal device.

If the URSP usage permission of the application account is unavailable permission, the URSP management request is the URSP deletion request, and the request carries the application identifier of the application and the identifier of the terminal device.

S904: The application server sends the URSP management request to the core network device.

S905: The core network device generates a URSP management instruction based on the URSP management request, where the instruction carries a URSP of the application.

If the URSP management request is the URSP delivery request, the core network device determines a corresponding URSP based on the application identifier carried in the request, and generates a URSP delivery instruction, where the instruction carries the URSP of the application.

If the URSP management request is the URSP deletion request, the core network device determines a corresponding URSP based on the application identifier carried in the request, and generates a URSP deletion instruction, where the instruction carries the URSP of the application.

S906: The core network device sends the URSP management instruction to the terminal device based on the identifier.

Specifically, the core network device sends the URSP delivery instruction to the terminal device by using NAS signaling based on the identifier of the terminal device that is carried in the URSP delivery request.

S907: The terminal device deletes or stores the URSP from or in a local URSP list based on the URSP management instruction, and manages a PDU session with a corresponding network slice.

For specific content of the step S907, refer to the step S304. Details are not described herein again in this embodiment.

According to the network slice management method provided in this embodiment, the application server requests, based on the state information of the application account, the core network device to manage, by using the NAS signaling, whether the terminal device can use a network slice of the application to which the application account belongs, to control whether the application account can use the network slice, so as to achieve an objective of dynamically adjusting a range of application accounts that use the network slice and resolve a problem of waste of network slice resources to some extent.

The following describes, with reference to specific embodiments, the network slice management method provided in the foregoing steps S901 to S907.

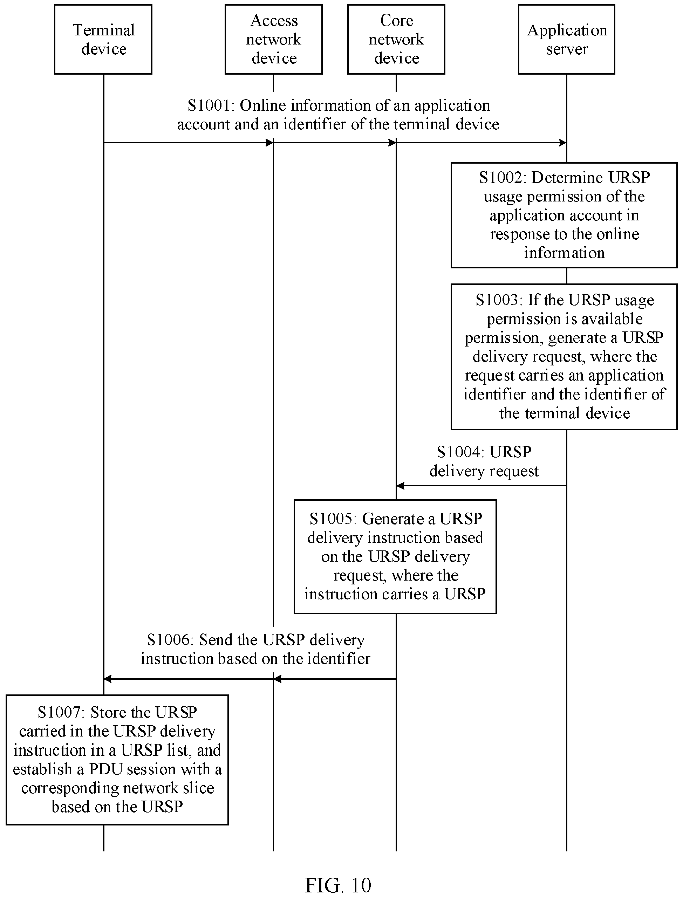

FIG. 10 is a schematic flowchart 7 of the network slice management method according to an embodiment of this application. The method is used to control an online application account to use a network slice of an application to which the online application account belongs. The method specifically includes the following steps.

S1001: The terminal device sends online information of the application account and an identifier of the terminal device to the application server.

S1002: The application server determines URSP usage permission of the application account in response to the online information.

For specific content of the step S1002, refer to the step S502. Details are not described herein again in this embodiment.

S1003: If the URSP usage permission of the application account is available permission, the application server generates a URSP delivery request, where the request carries an application identifier and the identifier of the terminal device.

S1004: The application server sends the URSP delivery request to the core network device.

S1005: The core network device generates a URSP delivery instruction based on the URSP delivery request, where the instruction carries a URSP of the application.

S1006: The core network device sends the URSP delivery instruction to the terminal device based on the identifier.

S1007: The terminal device stores, in a URSP list, the URSP carried in the URSP delivery instruction, and establishes a PDU session with a corresponding network slice based on the URSP.

According to the network slice management method provided in this embodiment of this application, the application server can send the URSP to the terminal device by using NAS signaling by the core network device, so that the terminal device can use the network slice of the application, and the online application account can use the network slice, to improve utilization of network slice resources.

According to the network slice management method provided in this embodiment of this application, the application server can control, by using the NAS signaling by the core network device and based on the online information of the application account, the terminal device to use the network slice of the application to which the application account belongs, so that the online application account can use the network slice, to improve utilization of the network slice resources.

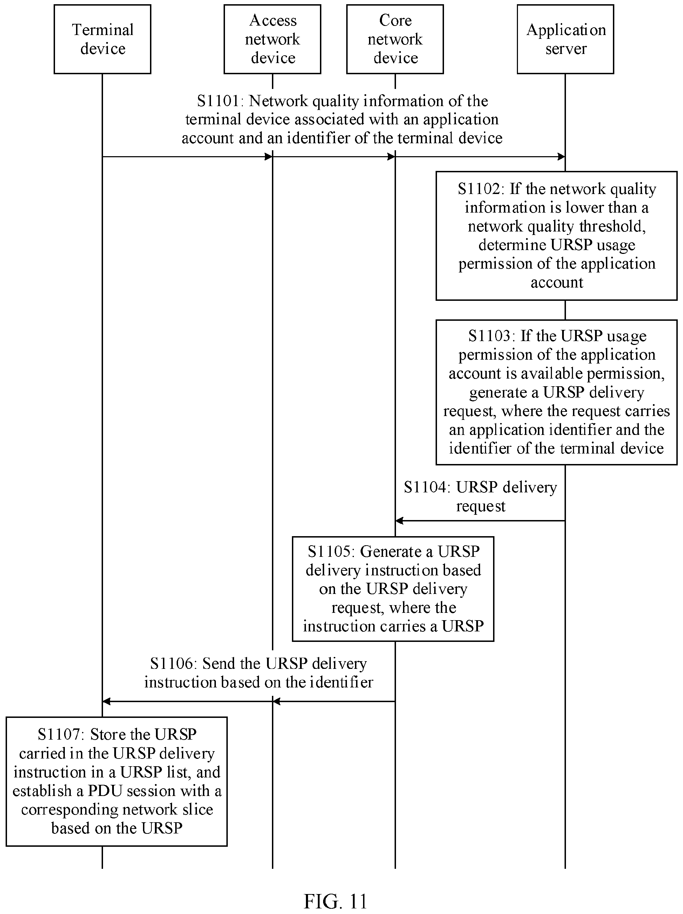

FIG. 11 is a schematic flowchart 8 of the network slice management method according to an embodiment of this application. The method is used to control an application account with low network quality to stop using a network slice of an application to which the application account belongs. The method specifically includes the following steps.

S1101: The terminal device sends network quality information of the application account and an identifier of the terminal device to the application server.

S1102: If the network quality is lower than a network quality threshold, the application server determines URSP usage permission of the application account.

For specific content of the step S1002, refer to the step S602. Details are not described herein again in this embodiment.

S1103: If the URSP usage permission of the application account is available permission, the application server generates a URSP management request, where the request carries an application identifier and the identifier of the terminal device.

S1004: The application server sends the URSP delivery request to the core network device.

S1105: The core network device generates a URSP delivery instruction based on the URSP delivery request, where the URSP delivery instruction carries a URSP of the application.

S1106: The core network device sends the URSP delivery instruction to the terminal device based on the identifier.

S1107: The terminal device stores, in a URSP list, the URSP carried in the URSP delivery instruction, and establishes a PDU session with a corresponding network slice based on the URSP.

According to the network slice management method provided in this embodiment of this application, the application server can control, by using NAS signaling by the core network device and based on the network quality information of the application account, the terminal device to use the network slice of the application to which the application account belongs, so that the online application account can use the network slice, to improve utilization of network slice resources.

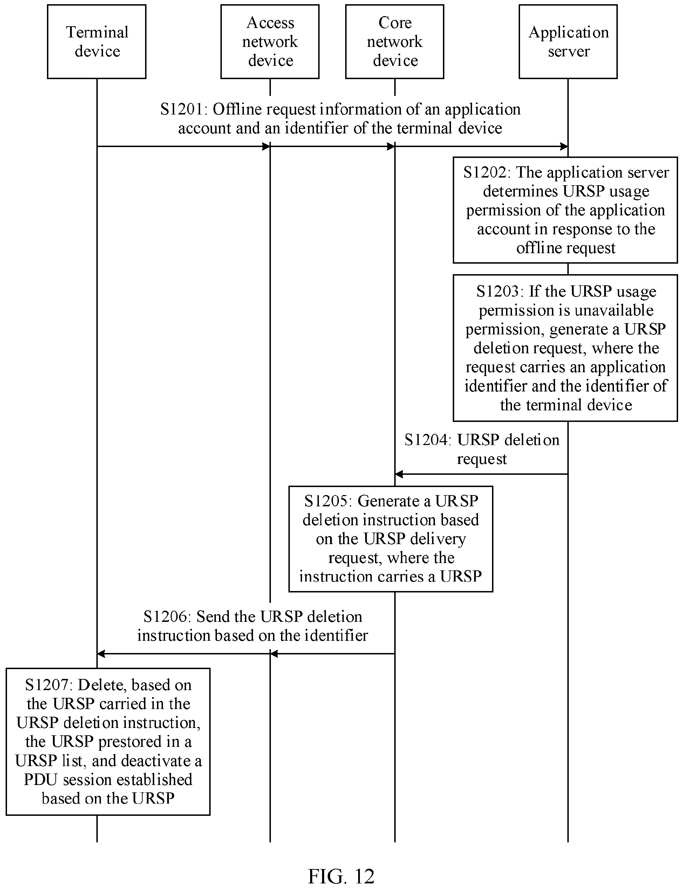

FIG. 12 is a schematic flowchart 9 of the network slice management method according to an embodiment of this application. The method is used to control an offline application account to stop using a network slice of an application to which the offline application account belongs. The method specifically includes the following steps.

S1201: The terminal device sends offline request of the application account and an identifier of the terminal device to the application server.

S1202: The application server determines URSP usage permission of the application account in response to the offline request information.

For specific content of the step S1202, refer to the step S702. Details are not described herein again in this embodiment.

S1203: If the URSP usage permission of the application account is unavailable permission, the application server generates a URSP delivery request, where the request carries an application identifier and the identifier of the terminal device.

S1204: The application server sends the URSP deletion request to the core network device.

S1205: The core network device generates a URSP deletion instruction based on the URSP deletion request, where the instruction carries a URSP of the application.

S1206: The core network device sends the URSP deletion instruction to the terminal device based on the identifier.

S1207: The terminal device deletes, based on the URSP carried in the URSP deletion instruction, the URSP prestored in a URSP list, and deactivates a PDU session established based on the URSP.

After deleting the URSP, the terminal device deactivates the PDU session related to the URSP, and temporarily does not use a corresponding network slice.

According to the network slice management method provided in this embodiment of this application, the application server can control, by using NAS signaling by the core network device and based on the offline request information of the application account, the terminal device to stop using the network slice of the application to which the application account belongs, so that the offline application account stops using the network slice. According to the method, a network slice resource occupied by the application account can be reserved for another application account to use, to improve utilization of the network slice resource.

The following describes a procedure in which the core network device sends a URSP management instruction to the terminal device and controls the terminal device to manage a URSP of an application according to an embodiment of this application.

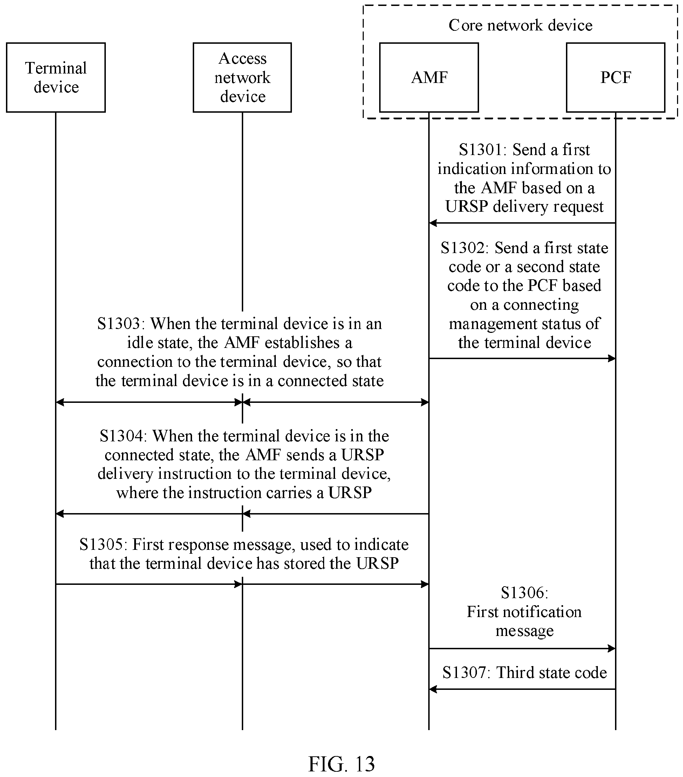

FIG. 13 is a schematic flowchart of a method for sending a URSP according to this embodiment of this application. The method specifically includes the following steps.

S1301: A PCF sends a first indication information to an AMF based on a URSP delivery request.

In the core network device, the PCF can determine a management policy for a URSP in the terminal device. For example, the PCF may send the first indication information to the AMF based on the URSP delivery request sent by an application server, to indicate the AMF to send a URSP to the terminal device. It should be noted that, the first indication information carries an application identifier of an application account and an identifier of the terminal device.

For example, the first indication information may be Namf_N1N2MessageTransfer(../{n1Message Content}, where n1MessageContent (namely, message content) may carry the application identifier of the application account and the identifier of the terminal device.

S1302: The AMF sends a first state code or a second state code to the PCF based on a connecting management status of the terminal device.

In the 5G communications system, the connecting management (connecting management, CM) status between the terminal device and the AMF includes an idle state (CM-IDLE) and a connected state (CM-CONNECTED). When the terminal device is in the connected state, a NAS signaling connection has been established between the terminal device and the AMF, and data may be transmitted between the terminal device and the AMF. When the terminal device is in the idle state, no NAS signaling connection is established between the terminal device and the AMF, and data cannot be transmitted between the terminal device and the AMF.

After receiving the URSP delivery instruction, the AMF first determines the connecting management status between the terminal device and the AMF based on the identifier of the terminal device. When the AMF detects that the terminal device is in the connected state, the AMF sends a first state code "200" to the PCF, to indicate that the AMF can process the first indication information sent by the PCF. When detecting that the terminal device is in the connected state, the AMF sends a second state code "202" to the PCF, to indicate that the AMF has received the first indication information but has not processed the first indication information.

S1303: When the terminal device is in the idle state, the AMF establishes a connection to the terminal device, so that the terminal device is in the connected state.

When the terminal device is in the idle state, the AMF may initiate a service-request (namely, a service request procedure) to the terminal device through paging based on the identifier of the terminal device, to request to establish a NAS signaling connection between the AMF and the terminal device. In response to the service-request initiated by the AMF, the terminal device establishes the signaling connection between the terminal device and the AMF, and changes from the idle state to the connected state.

S1304: When the terminal device is in the connected state, the AMF sends a URSP delivery instruction to the terminal device based on the identifier of the terminal device, where the instruction carries the URSP.

The AMF stores URSPs of different applications and a correspondence between each application and the URSP. After receiving the URSP delivery instruction, the AMF may determine a corresponding URSP based on the application identifier, and send the URSP to the terminal device based on the identifier of the terminal device by using the first indication message. For example, the first indication message may be DL NAS transport (payload container type=5 (UE policy container), payload container), where UE policy container (namely, a terminal device policy container) carries the URSP.

S1305: The terminal device sends a first response message to the AMF, where the first response message carries a URSP, and is used to indicate that the terminal device has stored the URSP.

After receiving the URSP delivery instruction, the terminal device stores the URSP in the URSP delivery instruction in a local URSP list, so that the application accesses a corresponding network slice based on the URSP, and establishes a connection to the application server. After storing the URSP, the terminal device sends the first response message to the AMF. For example, the first response message may be UL NAS transport (payload container type=5 (UE policy container), payload container), where UE policy container carries the URSP.

S1306: The AMF sends a first notification message to the PCF.

For example, the notification message may be a Namf_N1MessageNotify(n1Messagenotification), and is used to notify the PCF that the first indication information sent by the PCF has been processed.

S1307: The PCF sends a third state code to the AMF.

In this embodiment, the third state code is "204", which is used to indicate that the PCF has successfully processed the URSP delivery request.

In addition, for each network slice, the core network device maintains a terminal device identifier list, and the list stores an identifier of a terminal device that can access the network slice. For example, for an application A, when a maximum quantity of application accounts that can access a network slice of the application A is 1,000, a corresponding identifier list in the core network device may be shown in Table 4, where the identifier list includes a communication phone number of each slice account.

**Table 4 Identifier list**

| Sequence number | Identifier of a terminal device |
|---|---|
| 1 | 158xxxx2549 |
| 2 | 189xxxx6677 |
| 3 | 152xxxx7890 |
| 4 | 135xxxx5869 |
| 5 | 187xxxx1123 |
| ... | ... |
| 999 | (Null) |
| 1000 | (Null) |

In addition, the AMF of the core network device may add the identifier of the terminal device to the identifier list after any one of the foregoing steps S1305, S1306, or S1307 is performed.

According to the method for sending a URSP provided in this embodiment of this application, the core network device can send, based on the URSP delivery request sent by the application server, the URSP to the terminal device by using NAS signaling, so that the terminal device can establish a connection to the application server by using the network slice of the application.

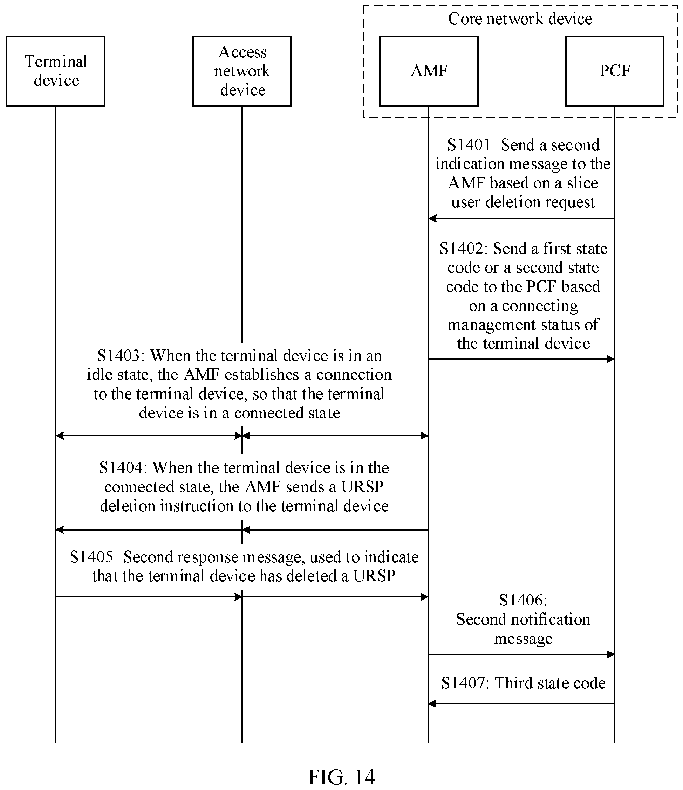

FIG. 14 is a schematic flowchart of a method for deleting a URSP according to this embodiment of this application. The method specifically includes the following steps.

S1401: A PCF sends a second indication message to an AMF based on a URSP deletion request.

In the core network device, the PCF can determine a management policy for a URSP in the terminal device. For example, the PCF may send the second indication message to the AMF based on the URSP deletion request sent by an application server, to control the AMF to delete the URSP in the terminal device. It should be noted that, the second indication message carries an application identifier of an application account and an identifier of the terminal device.

S1402: The AMF sends a first state code or a second state code to the PCF based on a connecting management status of the terminal device.

After receiving the second indication message, the AMF first determines the connecting management status between the terminal device and the AMF based on the identifier of the terminal device. When the AMF detects that the terminal device is in a connected state, the AMF sends a first state code "200" to the PCF, to indicate that the AMF can process the second indication message sent by the PCF. When detecting that the terminal device is in a connected state, the AMF sends a second state code "202" to the PCF, to indicate that the AMF has received the second indication message but has not processed the second indication message.

S1403: When the terminal device is in the idle state, the AMF establishes a connection to the terminal device, so that the terminal device is in the connected state.

For specific content of the step S1403, refer to the step S1303. Details are not described herein again in this embodiment.

S1404: When the terminal device is in the connected state, the AMF sends a URSP deletion instruction to the terminal device, where the instruction carries the URSP.

S1405: The terminal device sends a second response message to the AMF, where the second response message is used to indicate that the terminal device has deleted the URSP of the application.

Specifically, after receiving the URSP deletion instruction, the terminal device deletes, based on the application identifier carried in the URSP deletion instruction, the URSP prestored in a local URSP list, and sends the second response message to the AMF after the URSP is deleted.

S1406: The AMF sends a second notification message to the PCF.

The second notification message is used to notify the PCF that the second indication information sent by the PCF has been successfully processed.

S1407: The PCF sends a third state code to the AMF.

In this embodiment, the third state code is "204", which is used to indicate that the PCF has successfully processed the URSP deletion request.

The AMF of the core network device may delete the identifier of the terminal device from an identifier list after any one of S1405, S1406, or S1407.

It can be learned by comparing the network slice management methods provided in the foregoing embodiments that, compared with that the application server indirectly manages a range of application accounts that use a network slice, when the application processor directly manages the range of the application accounts that use the network slice, NAS signaling of the core network device does not need to be used, to avoid an internal management operation of the core network device and help reduce running pressure of the core network device. In addition, an identity of a SIM card currently installed in the terminal device does not need to be sent to the core network device, to help protect privacy information of a user.

In some embodiments, when an application runs on the terminal device, the application may further exit or be killed. As a result, the application cannot temporarily use a network slice, and a network slice resource is idle. To prevent an application account of the application that exits or is killed from occupying a network slice resource, in some embodiments, the terminal device may actively delete all URSPs related to the application, and deactivate a PDU session related to the URSP.

In addition, when the application server does not receive data from an application account within preset duration (for example, 10 minutes), the application server may delete the application account from a slice account list. When the core network device does not receive data from the terminal device within preset duration (for example, 10 minutes), the core network device may delete an identifier of the terminal device from an identifier list.

In this embodiment, that the application exits means that the application suddenly stops running according to an exit instruction of a user, and is disconnected from the application server. That the application is killed means that the application is forcibly closed by another application in a system, suddenly stops running, and is disconnected from the application server.

In some other embodiments, because there are a plurality of 5G operators, the terminal device can use the network slice only when a SIM card installed in the terminal device and a network slice to be used belong to a same operator. Therefore, when using the network slice through a URSP, the terminal device needs to first determine whether a public land mobile network PLMN identification code corresponding to the URSP is the same as a PLMN identification code of the SIM card. If the PLMN identification code corresponding to the URSP is different from the PLMN identification code of the SIM card different, it indicates that the URSP is invalid, and the terminal device deletes the URSP. The PLMN identification code is used to identify a belonging operator.

In some other embodiments, the core network device stores subscription information of a network slice service related to an application, and the subscription information includes a use deadline of a network slice. After detecting that the network slice service of the application expires, the core network device sends a URSP deletion instruction to all terminal devices based on an identifier in an identifier list of the application, so that all application accounts of the application stop using the network slice of the application.

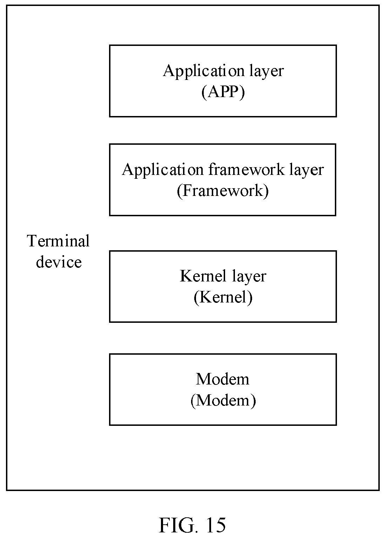

FIG. 15 is a schematic diagram of a structure of a terminal device according to an embodiment of this application. That an operating system of the terminal device is an Android system is used as an example. In some embodiments, the terminal device includes an application (APP) layer, an application framework (framework, FWK) layer, a kernel (Kernel) layer, and a modem (Modem). The application layer may include a series of application packages. The application package may include applications such as Game, Chat, Office, Messages, Calendar, Camera, Videos, Navigation, Gallery, and Phone. The application framework layer is used to provide an application programming interface (application programming interface, API) and a programming framework for each application at the application layer. The application framework layer may include some predefined functions, such as a function for receiving an event sent by the application framework layer. The kernel is used to manage memories, files, peripherals, system resources, and device networks. The kernel usually runs processes and provides communication between the processes. The modem is configured to receive and send a message of another device (for example, a core network device), convert a digital signal into an analog signal through modulation at a transmit end, and convert an analog signal into a digital signal through demodulation at a receive end.

To further ensure smoothness and stability of running an application on the terminal device, an application vendor may subscribe to at least two network slices with an operator, where the at least two network slices include a first network slice and a second network slice. For example, the first network slice may be a general-purpose network slice, a URSP of the first network slice is a URSP 1, and a traffic descriptor in the URSP 1 is match all (that is, match all). It may be understood that when accessing different destination addresses, applications may use the first network slice by using the URSP 1. The second network slice may be a network slice with higher QoS, a URSP of the second network slice is a URSP 2, and a traffic descriptor in the URSP 2 includes destination addresses IP 2 and port 2. It may be understood that the terminal device can use the second network slice by using the URSP 2 only when destination addresses accessed by the application are the IP 2 and the port 2.

A user may purchase, by signing a contract with an operator, permission to use a plurality of network slices of an application. For example, a user may subscribe to and purchase a directional 5G network slice package by using a service center of an operator, a WeChat official account, or dialing a customer service phone number of the operator. A resource in the package may include 100 GB of multi-network slice directional traffic of specified applications. These specified applications may include an application A, an application B, an application C, an application D, and the like. In addition, each application in the package may access a corresponding application server by using at least two network slices.

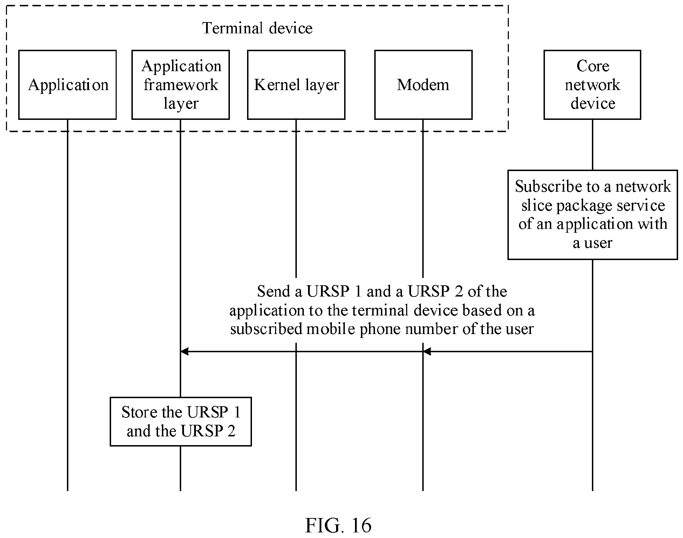

After the user purchases the directional 5G network slice package, the operator sends related URSPs of all specified applications in a range of the package to a terminal device corresponding to a subscribed mobile phone number. For example, as shown in FIG. 16, the application A is used as an example. After a user subscribes to the 5G network slice package service with an operator, the core network device sends a URSP of a network slice of the application A to a terminal device by using a subscribed mobile phone number, where the URSP includes a URSP 1 of a first network slice and a URSP 2 of a second network slice. After receiving the URSP 1 and the URSP 2, the terminal device stores the URSP 1 and the URSP 2 in a framework.

After the terminal device stores the URSP 1 and the URSP 2, the application A may access a first server for the application by using the first network slice, or access a second server for the application by using the second network slice. The first server is a general-purpose server, and each application account of the application can access the first server by using the first network slice based on the URSP 1. However, only an application account logged into a terminal device that stores the URSP 2 can access the second server by using the second network slice based on the URSP 2.

Because the first network slice is a common network slice, the terminal device automatically activates a first PDU session with the first network slice after being powered on. In a running process, each application on the terminal device may be connected to a corresponding application server by using the first network slice. Based on this, in some embodiments, after an application is started, the application may first access the first server (namely, the general-purpose server) by using the first network slice.

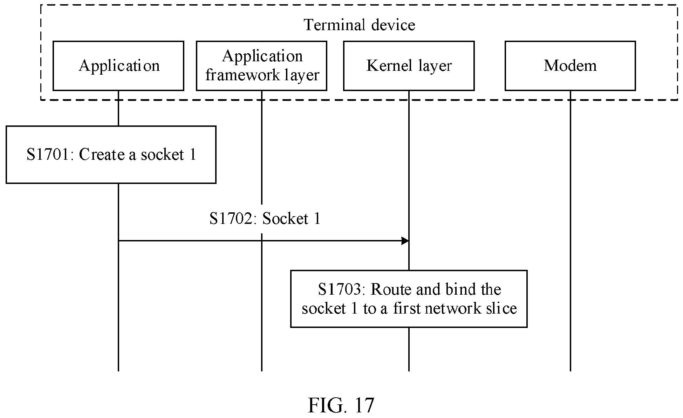

FIG. 17 is a schematic diagram of a method for using a first network slice according to an embodiment of this application. The method is used by an application to access a first server by using the first network slice, and specifically includes the following steps.

S1701: The application creates a socket (Socket) 1, where the socket 1 is used by the application to access the first server by using the first network slice.

A socket may be formed by IP quintuple information, including five parameters such as a source IP address, a source port, a protocol type, a destination IP address, and a destination port.

When the socket 1 is used to access the first server, a destination IP address and a destination port of the socket 1 are an IP address and a destination port of the first server, for example, an IP 1 and a port 1. In a process of developing the application, an application vendor may pre-store the IP address and the port of the first server in an application package, so that the application invokes the IP address and the port when the application needs to access the first server.

When the socket 1 is used to use the first network slice, when the application creates the socket 1, a kernel of a terminal device allocates, to the application, a source IP address and a source port for accessing the first network slice, for example, an IP-A and a port-A. A core network device may accurately send data to the application based on the source IP address and the source port by using the first network slice.

Therefore, in this embodiment, the application can create the socket 1 based on the IP address and the port of the first server, the source IP address and the source port for accessing the first network slice, and a protocol type. For example, in this embodiment, the socket 1 may include the IP-A, the port-A, a TCP, the IP 1, and the port 1.

S1702: The application sends the socket 1 to the kernel.

S1703: The Kernel routes and binds the socket 1 route to the first network slice.

In this embodiment, routing and binding the socket 1 to the first network slice refers to establishing a correspondence between the first network slice and a user identification (user identification, UID) of the application to which the socket 1 belongs, a destination IP address, and a destination port. Then, in a data transmission process, all data packets including the socket 1 are transmitted by using a first PDU session between the terminal device and the first network slice.

In conclusion, according to the method for using the first network slice provided in this embodiment of this application, the terminal device may transmit data between the application and the first server by using the first network slice. This can ensure that all application accounts of the application can use the first network slice, thereby improving user experience to some extent.

The first network slice is a general-purpose network slice, and a quantity of users is large. Therefore, when the application uses the first network slice, network quality may be poor. To improve the network quality, an application server may switch to use a second network slice with higher QoS. The following describes a process for switching a network slice.

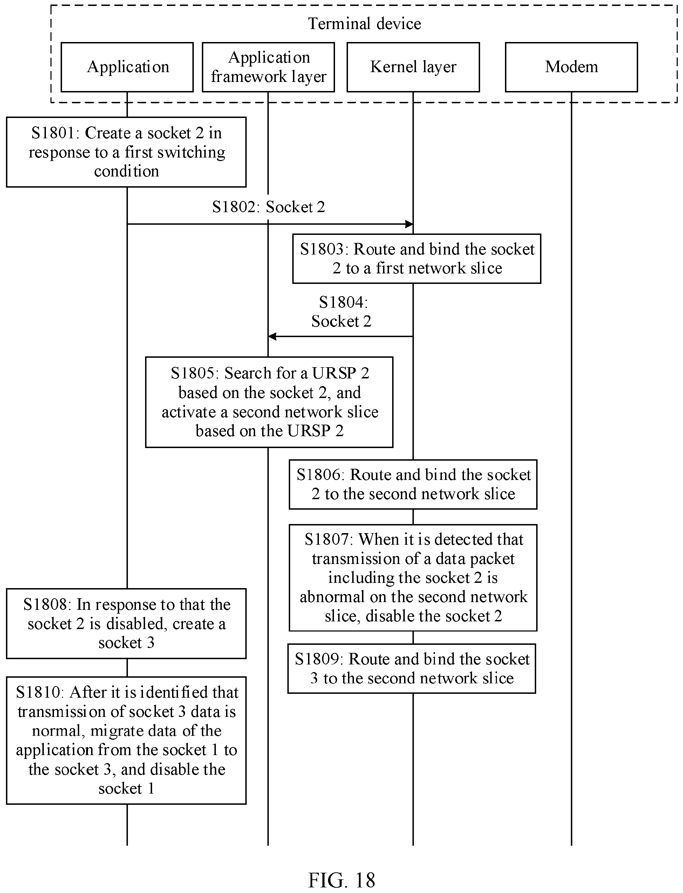

FIG. 18 is a schematic flowchart 1 of a method for switching a network slice according to an embodiment of this application. The method is used to switch an application from a first network slice to a second network slice, and specifically includes the following steps.

S1801: The application creates a socket 2 if a first switching condition is detected, where the socket 2 is used by the application to access a second server by using the first network slice.

In this embodiment, the first switching condition may be that network quality of the application is lower than a network quality threshold, an application account is upgraded to a VIP account, or the like. When the first switching condition is detected by the application, the application starts to enable the second network slice with higher QoS to access the second server of the application, to improve a data transmission speed. However, because a terminal device has established a first PDU session with the first network slice, and has not established a second PDU session with the second network slice, the application can first access the second server only by using the first network slice.

To access the second server by using the first network slice, the application first needs to create the socket 2.

When the socket 2 is used to access the second server, a destination IP address and a destination port of the socket 2 are an IP address and a destination port of the second server, for example, an IP 2 and a port 2. In a process of developing the application, an application vendor may pre-store the IP address and the port of the second server in an application package, so that the application invokes the IP address and the port when the application needs to access the second server.

Because both the socket 2 and the socket 1 transmit data by using the first network slice, when the application creates the socket 2, a kernel of the terminal device allocates, to the application, a source IP address the same as that of the socket 1, for example, the IP-A. In addition, the kernel randomly allocates a source port to the application, for example, a port-D.

Therefore, in this embodiment, the application can create the socket 2 based on the IP address and the port of the second server, the source IP address and the source port for accessing the first network slice, and a protocol type. For example, in this embodiment, the socket 1 may include the IP-A, the port-D, a TCP, the IP 2, and the port 2.

S1802: The application sends the socket 2 to the kernel.

S1803: The kernel routes and binds the socket 2 to the first network slice.

Because the PDU session between the terminal device and the first network slice has been established, the kernel needs to first route and bind the socket 2 to the first network slice, to transmit data between the terminal device and the second application server by using the first network slice.

In this embodiment, routing and binding the socket 2 to the first network slice refers to establishing a correspondence between the first network slice and a UID of the application to which the socket 2 belongs, a destination IP address, and a destination port. Then, in a data transmission process, all data packets including the socket 2 are transmitted by using the first PDU session between the terminal device and the first network slice.

S1804: The kernel sends the socket 2 to a framework.

After the kernel routes and binds the socket 2 to the first network slice, the kernel can detect that the terminal device has a requirement for accessing the second server. After the requirement is detected, the kernel needs to activate the second network slice, to increase a data transmission rate. Because the operation of activating a network slice is performed by the framework, the kernel needs to send the socket 2 to the framework.

S1805: The framework searches for a URSP 2 based on the socket 2, and activates the second network slice based on the URSP 2.

A URSP list is maintained in the framework, and the list includes URSPs of different applications in the terminal device. Because the socket 2 includes the IP 2 and the port 2, the URSP 2 also includes the IP 2 and the port 2. The framework may find the corresponding URSP 2 in the URSP list based on the socket 2, and activates the second network slice based on the URSP 2, so that the second PDU session between the terminal device and the second network slice is successfully established.

S1806: The kernel routes and binds the socket 2 to the second network slice.

In this embodiment, routing and binding the socket 2 to the second network slice refers to establishing a correspondence between the second network slice and the UID of the application to which the socket 2 belongs, the destination IP address, and the destination port. Then, in a data transmission process, all data packets including the socket 2 are transmitted by using the second PDU session between the terminal device and the second network slice.

S1807: When detecting that transmission of the data packet including the socket 2 is abnormal on the second network slice, the kernel disables the socket 2.

When transmitting the data by using different network slices, the terminal device uses different source IP addresses and different source ports. The source IP address and the source port in the socket 2 are addresses used to access the first network slice. Therefore, after the kernel routes and binds the socket 2 to the second network slice, the second network slice cannot be accessed by using the socket 2, and a data transmission exception occurs. Therefore, the kernel needs to disable the socket 2 after detecting that transmission of the socket 2 on the second network slice is abnormal.

S1808: In response to that the socket 2 is disabled, the application creates a socket 3, where the socket 3 is used by the application to access the second server by using the second network slice.

When the socket 3 is used to access the second server, a destination IP address and a destination port of the socket 3 are the IP address and the destination port of the second server, for example, the IP 2 and the port 2.

When the socket 3 is used to use the second network slice, when the application creates the socket 3, the kernel of the terminal device allocates, to the application, a source IP address and a source port that are used to use the second network slice, for example, an IP-B and a port-B.

It should be noted that, when the application creates sockets that use different network slices, source IP addresses and source ports that are allocated by the kernel to the application are different. For example, when the application creates the socket 1 that uses the first network slice, the source IP address and the source port that are allocated by the kernel to the application are respectively the IP-A and the port-A. When the application establishes the socket that uses the second network slice, the source IP address and the source port that are allocated by the kernel to the application are respectively the IP-B and the port-B.

Therefore, in this embodiment, the application can create the socket 3 based on the IP address and the port of the second server, the source IP address and the source port for accessing the second network slice, and a protocol type. For example, in this embodiment, the socket 3 may include the IP-B, the port-B, a TCP, the IP 2, and the port 2.

S1809: The kernel routes and binds the socket 3 to the second network slice.

In this embodiment, routing and binding the socket 3 to the second network slice refers to establishing a correspondence between the second network slice and the UID of the application to which the socket 3 belongs, the destination IP address, and the destination port. Then, in a data transmission process, all data packets whose packet headers include the socket 3 are transmitted by using the second PDU session between the terminal device and the second network slice.

S1810: After detecting that transmission of socket 3 data is normal, the application migrates data of the application from the socket 1 to the socket 3, and disables the socket 1.

Specifically, the application may change a header of an unsent data packet from the socket 1 to the socket 3 for sending, to migrate the data of the application from the socket 1 to the socket 3.

In conclusion, according to the method for switching a network slice provided in this embodiment, the application can switch transmitted data from the first network slice to the second network slice, to improve the data transmission rate.

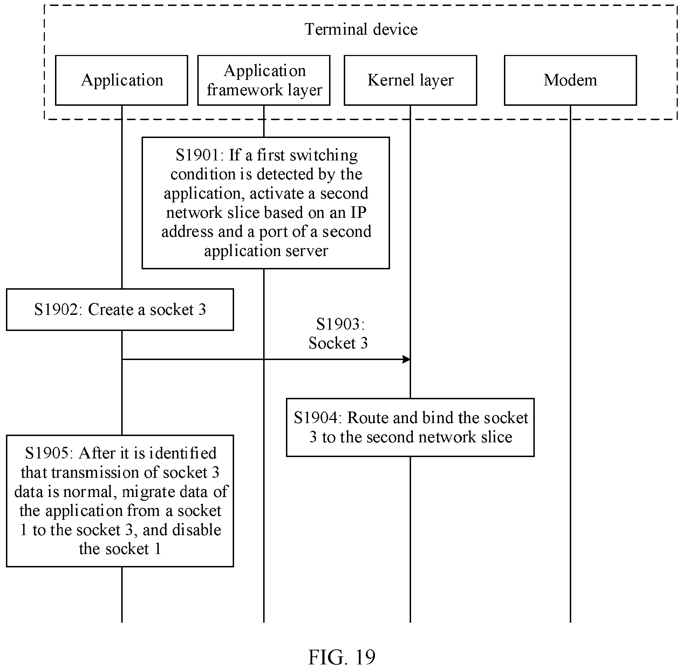

FIG. 19 is a schematic flowchart 2 of the method for switching a network slice according to an embodiment of this application. The method may also be used to switch an application from a first network slice to a second network slice, and includes the following steps S1901 to S1905.

S1901: If a first switching condition is detected, the application controls a framework to activate the second network slice based on an IP address and a port of a second application server.

Specifically, after the first switching condition is detected, the application may send, to the framework, the IP address and the port that are of the second server and that are pre-stored in an application package. Then, the framework finds a corresponding URSP 2 in a URSP list based on the IP address and the port of the second server, activates the second network slice based on the URSP 2, and establishes a second PDU session between a terminal device and the second network slice.

S1902: The application creates a socket 3, where the socket 3 is used by the application to access the second server by using the second network slice.

For example, as shown in the step S1808, the socket 3 may include an IP-B, a port-B, a TCP, an IP 2, and a port 2.

S1903: The application sends the socket 3 to a kernel.

S1904: The kernel routes and binds the socket 3 to the second network slice.

For specific content of the step S1904, refer to the step S1809. Details are not described herein again in this embodiment.

S1905: After detecting that transmission of socket 3 data is normal, the application migrates data of the application from a socket 1 to the socket 3, and disables the socket 1.

For specific content of the step S1905, refer to the step S1810. Details are not described herein again in this embodiment.

In conclusion, according to the method for switching a network slice provided in this embodiment, the application can switch transmitted data from the first network slice to the second network slice, to improve a data transmission rate.

When the application uses the second network slice, in some embodiments, for example, the application may switch, based on a user instruction or after permission to use the second network slice expires, the data from the second network slice to the first network slice for transmission. The following describes the process in detail.

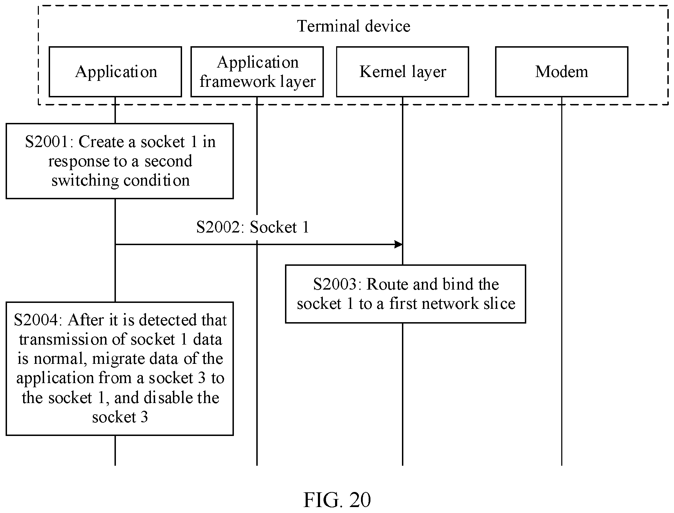

FIG. 20 is a schematic flowchart 3 of the method for switching a network slice according to an embodiment of this application. The method is used to switch an application from a second network slice to a first network slice, and specifically includes the following steps.

S2001: If a second switching condition is detected, the application creates a socket 1, where the socket 1 is used by the application to access a first server by using the first network slice.

In this embodiment, the second switching condition may be that a switching instruction is received from a user, or permission of the application to use the second network slice expires, or the like. In this step, as shown in the step S1701, the socket 1 may include an IP-A, a port-A, a TCP, an IP 1, and a port 1.

S2002: The application sends the socket 1 to a kernel.

S2003: The kernel routes and binds the socket 1 to the first network slice.

Because a terminal device has established a first PDU session with the first network slice after being powered on, the kernel may directly route and bind the socket 1 to the first network slice.

S2004: After detecting that transmission of socket 1 data is normal, the application migrates data of the application from a socket 3 to the socket 1, and disables the socket 3.

Specifically, the application may change an unsent data packet from the socket 3 to the socket 1 for sending, to migrate the data of the application from the socket 3 to the socket 1.

In conclusion, according to the method for switching a network slice provided in this embodiment of this application, the data of the application is switched from the second network slice to the first network slice for transmission, to ensure normal running of the application.

It should be understood that sequence numbers of the steps do not mean execution sequences in the foregoing embodiments. The execution sequences of the processes should be determined based on functions and internal logic of the processes, but should not be construed as any limitation on implementation processes of embodiments of this application.

Based on the network slice management method provided in the foregoing embodiments, an embodiment provides a network slice management system.

The network slice management system provided in this embodiment of this application includes a terminal device and an application server. An application is installed in the terminal device, and the terminal device can log in to the application server by using the application and an application account. The application server obtains first state information of the application account, and sends a URSP delivery instruction to the terminal device based on the first state information.

The terminal device stores a URSP of the application in a local URSP list based on the URSP delivery instruction, and uses, based on the URSP, a network slice of the application to communicate with the application server.

In some embodiments, the application server further obtains second state information of the application account, and sends a URSP deletion instruction to the terminal device based on the second state information. The terminal device further deletes the URSP from the URSP list based on the URSP deletion instruction, and stops using, based on the URSP, the network slice to communicate with the application server.

In some embodiments, the first state information includes online information sent by the terminal device or network quality information of the terminal device, where the network quality information is lower than a network quality threshold.

In some embodiments, the second state information includes offline request information sent by the terminal device or priority information determined by the application server based on local related information of the application account, where the priority information is lower than a preset priority.

In some embodiments, that the application server sends a URSP delivery instruction to the terminal device based on the first state information includes: The application server determines URSP usage permission of the application account based on the first state information; and if the URSP usage permission is available permission, the application server generates the URSP delivery instruction, and sends the URSP delivery instruction to the terminal device.

In some embodiments, that the application server sends a URSP deletion instruction to the terminal device based on the second state information includes: The application server determines URSP usage permission of the application account based on the second state information; and if the URSP usage permission is unavailable permission, the application server generates the URSP deletion instruction, and sends the URSP deletion instruction to the terminal device.

In some embodiments, the network slice management system further includes a core network device; and the application server further receives an identifier of the terminal device from the terminal device. That the application server sends a URSP delivery instruction to the terminal device based on the first state information includes: The application server determines URSP usage permission of the application account based on the first state information; and if the URSP usage permission is available permission, the application server generates a URSP delivery request, and sends the URSP delivery request to the core network device, so that the core network device generates the URSP delivery instruction, and sends the URSP delivery instruction to the terminal device based on the identifier.

In some embodiments, the network slice management system further includes a core network device; and the application server further receives an identifier of the terminal device from the terminal device. That the application server sends a URSP deletion instruction to the terminal device based on the second state information includes: The application server determines URSP usage permission of the application account based on the second state information; and if the URSP usage permission is unavailable permission, the application server generates a URSP deletion request, and sends the URSP deletion request to the core network device, so that the core network device generates the URSP deletion instruction, and sends the URSP deletion instruction to the terminal device based on the identifier.

In some embodiments, the identifier includes a phone number or an international mobile subscriber identity IMSI of the terminal device.

In some embodiments, that the application server determines URSP usage permission of the application account based on the first state information includes: When a quantity of slice accounts is less than N, if a priority of the application account ranks top N, the application server determines the URSP usage permission of the application account as the available permission. The slice account is an application account that has obtained the URSP, and N is a maximum quantity of application accounts that can access the network slice.

In some embodiments, that the application server determines URSP usage permission of the application account based on the second state information includes: If the application account is in a local slice account list, the application server determines the URSP usage permission of the application account as the unavailable permission. The slice account list stores an application account that has obtained the URSP.

In some embodiments, the URSP includes a traffic descriptor of the application and a route selection descriptor used to select the network slice. The traffic descriptor includes an application identifier, an internet protocol IP triplet, a data network name DNN, or a fully qualified domain name FQDN of an access destination. The route selection descriptor includes network slice selection assistance information NSSAI, a DNN, and a protocol type for data transmission of the network slice.

An embodiment of this application further provides an application server. The application server is associated with a terminal device, an application is installed in the terminal device, and the terminal device can log in to the application server by using the application and an application account. The application server is configured to: obtain first state information of the application account; and send a URSP delivery instruction to the terminal device based on the first state information. The URSP delivery instruction instructs the terminal device to store a URSP of the application in a local URSP list, and use, based on the URSP, a network slice of the application to communicate with the application server.

In some embodiments, the application server is further configured to: obtain second state information of the application account; and send a URSP deletion instruction to the terminal device based on the second state information. The URSP deletion instruction instructs the terminal device to delete the URSP from the URSP list, and stop using, based on the URSP, the network slice to communicate with the application server.

In some embodiments, the first state information includes online information received from the terminal device or network quality information of the terminal device, where the network quality information is lower than a network quality threshold.

In some embodiments, the second state information includes offline request information received from the terminal device or priority information determined based on local related information of the application account, where the priority information is lower than a preset priority.

In some embodiments, the sending a URSP delivery instruction to the terminal device based on the first state information includes: determining URSP usage permission of the application account based on the first state information; and if the URSP usage permission is available permission, generating the URSP delivery instruction, and sending the URSP delivery instruction to the terminal device.

In some embodiments, the sending a URSP deletion instruction to the terminal device based on the second state information includes: determining URSP usage permission of the application account based on the second state information; and if the URSP usage permission is unavailable permission, generating the URSP deletion instruction, and sending the URSP deletion instruction the terminal device.

In some embodiments, the application server further receives an identifier of the terminal device from the terminal device. The sending a URSP delivery instruction to the terminal device based on the first state information includes: determining URSP usage permission of the application account based on the first state information; and if the URSP usage permission is available permission, generating a URSP delivery request, and sending the URSP delivery request to a core network device, so that the core network device generates the URSP delivery instruction, and sends the URSP delivery instruction to the terminal device based on the identifier.

In some embodiments, the application server further receives an identifier of the terminal device from the terminal device. The sending a URSP deletion instruction to the terminal device based on the second state information includes: determining URSP usage permission of the application account based on the second state information; and if the URSP usage permission is unavailable permission, generating a URSP deletion request, and sending the URSP deletion request to a core network device, so that the core network device generates the URSP deletion instruction, and sends the URSP deletion instruction to the terminal device based on the identifier.

In some embodiments, the identifier includes a phone number or an international mobile subscriber identity IMSI of the terminal device.

In some embodiments, the determining URSP usage permission of the application account based on the first state information includes: when a quantity of slice accounts is less than N, if a priority of the application account ranks top N, determining the URSP usage permission of the application account as the available permission, where the slice account is an application account that has obtained the URSP, and N is a maximum quantity of application accounts that can access the network slice.

In some embodiments, the determining URSP usage permission of the application account based on the second state information includes: if the application account is in a local slice account list, determining the URSP usage permission of the application account as the unavailable permission. The slice account list stores an application account that has obtained the URSP.

An embodiment of this application further provides a terminal device. An application is installed in the terminal device, and the terminal device can log in to an application server by using the application and an application account. The terminal device is configured to: receive a UE route selection policy URSP delivery instruction, where the URSP delivery instruction is sent by the application server based on first state information of the application account; store a URSP of the application in a local URSP list based on the URSP delivery instruction; and use, based on the URSP, a network slice of the application to communicate with the application server.

In some embodiments, the terminal device is further configured to: receive a URSP deletion instruction, where the URSP deletion instruction is sent by the application server based on second state information of the application account; store the URSP of the application in the local URSP list based on the URSP deletion instruction; and stop using, based on the URSP, the network slice to communicate with the application server.

In some embodiments, before receiving the URSP delivery instruction, the terminal device is further configured to send the first state information to the application server, or send the first state information and an identifier of the terminal device.

In some embodiments, the first state information is online information or network quality information of the terminal device, where the network quality information is lower than a network quality threshold.

In some embodiments, before receiving the URSP deletion instruction, the terminal device is further configured to send the second state information to the application server, or send the second state information and an identifier of the terminal device.

In some embodiments, the second state information is offline request information.

An embodiment further provides a computer-readable storage medium. The computer-readable storage medium stores a computer program, and when the computer program is executed by a processor, the method performed by the application server in the foregoing embodiment is implemented.

An embodiment further provides a computer-readable storage medium. The computer-readable storage medium stores a computer program, and when the computer program is executed by a processor, the method performed by the terminal device in the foregoing embodiment is implemented.

It should be understood that the computer-readable medium in embodiments may include at least any entity or apparatus that can carry computer program code to the application server/terminal device, a recording medium, a computer memory, a read-only memory (Read-Only Memory, ROM), a random access memory (Random Access Memory, RAM), an electrical carrier signal, a telecommunication signal, and a software distribution medium, for example, a USB flash drive, a removable hard disk, a magnetic disk, or an optical disk. In some jurisdictions, the computer-readable medium cannot be the electrical carrier signal or the telecommunication signal according to legislation and patent practices.

The processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be alternatively any conventional processor or the like.

An embodiment further provides a computer program product. When the computer program product runs on an application server, the application server is enabled to perform the method performed by the application server in the foregoing embodiment.

An embodiment further provides a computer program product. When the computer program product runs on a terminal device, the terminal device is enabled to perform the method performed by the terminal device in the foregoing embodiment.

The computer program includes computer program code. The computer program code may be in a source code form, an object code form, an executable file form, some intermediate forms, or the like.

It may be clearly understood by a person skilled in the art that, for the purpose of convenient and brief description, for a detailed working process of the foregoing network slice management system, application server, and terminal device, refer to a corresponding process in the foregoing method embodiments. Details are not described herein again.

It should be understood that in the descriptions of the specification and appended claims of this application, the terms "first", "second", "third", and the like are merely used for distinguishing and description, and cannot be understood as an indication or implication of relative importance.

When used in the specification and the appended claims of this application, the term "include" indicates presence of described features, entireties, steps, operations, elements, and/or components, but does not exclude presence or addition of one or more other features, entireties, steps, operations, elements, components, and/or collections thereof.

Reference to "an embodiment", "some embodiments", or the like in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application server, wherein the application server is associated with a terminal device (110), an application is installed in the terminal device (110), and the terminal device (110) can log in to the application server by using the application and an application account; and the application server is configured to:
obtain first state information of the application account from the terminal device (110), wherein the first state information comprises online information received from the terminal device (110) or network quality information of the terminal device (110);
send a user equipment, UE, route selection policy, URSP, delivery instruction to the terminal device (110) based on the first state information, wherein
the URSP delivery instruction instructs the terminal device (110) to store the URSP of the application in a local URSP list, and use, based on the URSP, a network slice of the application to communicate with the application server, and wherein
the sending of the URSP delivery instruction to the terminal device (110) based on the first state information comprises:
determining URSP usage permission of the application account based on the first state information (S502); and
if the URSP usage permission is available permission, generating the URSP delivery instruction, and sending the URSP delivery instruction (S503) to the terminal device (110);
obtain second state information of the application account from the terminal device (110), wherein the second state information comprises offline request information received from the terminal device (110); and
send a URSP deletion instruction to the terminal device (110) based on the second state information, wherein
the URSP deletion instruction instructs the terminal device (110) to delete the URSP from the URSP list, and stop using, based on the URSP, the network slice to communicate with the application server, and wherein
the sending of the URSP deletion instruction to the terminal device (110) based on the second state information comprises:
determining URSP usage permission of the application account based on the second state information (S702);
and
if the URSP usage permission is unavailable permission, generating the URSP deletion instruction (S703), and sending the URSP deletion instruction to the terminal device (110).

2. The application server according to claim 1, wherein the network quality information is lower than a network quality threshold.

3. A terminal device (110), wherein an application is installed in the terminal device (110), and the terminal device (110) can log in to an application server by using the application and an application account; and the terminal device (110) is configured to:
send first state information to the application server, wherein the first state information is online information or network quality information of the terminal device (110);
receive a UE route selection policy URSP delivery instruction, wherein the URSP delivery instruction is received from the application server based on the first state information of the application account;
store a URSP of the application in a local URSP list based on the URSP delivery instruction;
use, based on the URSP, a network slice of the application to communicate with the application server;
send second state information to the application server, wherein the second state information is offline request information;
receive a URSP deletion instruction, wherein the URSP deletion instruction is received from the application server based on the second state information of the application account (S705);
delete the URSP of the application from the local URSP list based on the URSP deletion instruction; and
stop using, based on the URSP, the network slice to communicate with the application server.

4. The terminal device (110) according to claim 3, wherein the network quality information is lower than a network quality threshold.

## Patentansprüche

1. Anwendungsserver, wobei der Anwendungsserver mit einer Endgerätevorrichtung (110) assoziiert ist, wobei eine Anwendung in der Endgerätevorrichtung (110) installiert ist und wobei die Endgerätevorrichtung (110) sich unter Verwendung der Anwendung und eines Anwendungskontos bei dem Anwendungsserver anmelden kann; und wobei der Anwendungsserver konfiguriert ist zum:
Erhalten von ersten Zustandsinformationen des Anwendungskontos von der Endgerätevorrichtung (110), wobei die ersten Zustandsinformationen Online-Informationen, die von der Endgerätevorrichtung (110) empfangen werden, oder Netzwerkqualitätsinformationen der Endgerätevorrichtung (110) umfassen;
Senden einer Lieferanweisung einer Routenauswahlrichtlinie für eine Benutzereinrichtung, UE, URSP-Lieferanweisung, basierend auf den ersten Zustandsinformationen, an die Endgerätevorrichtung (110), wobei
die URSP-Lieferanweisung die Endgerätevorrichtung (110) anweist, die URSP der Anwendung in einer lokalen URSP-Liste zu speichern und, basierend auf der URSP, eine Netzwerkpartition der Anwendung zu verwenden, um mit dem Anwendungsserver zu kommunizieren, und wobei
das Senden der URSP-Lieferanweisung, basierend auf den ersten Zustandsinformationen, an die Endgerätevorrichtung (110) umfasst:
Ermitteln einer URSP-Nutzungserlaubnis des Anwendungskontos basierend auf den ersten Zustandsinformationen (S502); und
wenn die URSP-Nutzungserlaubnis eine zur Verfügung stehende Erlaubnis ist, Erzeugen der URSP-Lieferanweisung und Senden der URSP-Lieferanweisung (S503) an die Endgerätevorrichtung (110);
Erhalten von zweiten Zustandsinformationen des Anwendungskontos von der Endgerätevorrichtung (110), wobei die zweiten Zustandsinformationen Offline-Anforderungsinformationen umfassen, die von der Endgerätevorrichtung (110) empfangen werden; und
Senden einer URSP-Löschanweisung an die Endgerätevorrichtung (110) basierend auf den zweiten Zustandsinformationen, wobei
die URSP-Löschanweisung die Endgerätevorrichtung (110) anweist, die URSP aus der URSP-Liste zu löschen und die Verwendung, basierend auf der URSP, der Netzwerkpartition zum Kommunizieren mit dem Anwendungsserver zu stoppen, und wobei
das Senden der URSP-Löschanweisung an die Endgerätevorrichtung (110) basierend auf den zweiten Zustandsinformationen umfasst:
Ermitteln der URSP-Nutzungserlaubnis des Anwendungskontos basierend auf den zweiten Zustandsinformationen (S702); und
wenn die URSP-Nutzungserlaubnis eine nicht zur Verfügung stehende Erlaubnis ist, Erzeugen der URSP-Löschanweisung (S703) und Senden der URSP-Löschanweisung an die Endgerätevorrichtung (110).

2. Anwendungsserver nach Anspruch 1, wobei die Netzwerkqualitätsinformationen niedriger als ein Netzwerkqualitätsschwellenwert sind.

3. Endgerätevorrichtung (110), wobei in der Endgerätevorrichtung (110) eine Anwendung installiert ist und wobei sich die Endgerätevorrichtung (110) unter Verwendung der Anwendung und eines Anwendungskontos bei einem Anwendungsserver anmelden kann; und wobei die Endgerätevorrichtung (110) konfiguriert ist zum:
Senden von ersten Zustandsinformationen an den Anwendungsserver, wobei die ersten Zustandsinformationen Online-Informationen oder Netzwerkqualitätsinformationen der Endgerätevorrichtung (110) sind;
Empfangen einer Lieferanweisung einer UE-Routenauswahlrichtlinie, URSP-Lieferanweisung, wobei die URSP-Lieferanweisung von dem Anwendungsserver basierend auf den ersten Zustandsinformationen des Anwendungskontos empfangen wird;
Speichern einer URSP der Anwendung in einer lokalen URSP-Liste basierend auf der URSP-Lieferanweisung;
Verwenden, basierend auf der URSP, einer Netzwerkpartition der Anwendung, um mit dem Anwendungsserver zu kommunizieren;
Senden von zweiten Zustandsinformationen an den Anwendungsserver, wobei die zweiten Zustandsinformationen Offline-Anforderungsinformationen sind;
Empfangen einer URSP-Löschanweisung, wobei die URSP-Löschanweisung von dem Anwendungsserver basierend auf den zweiten Zustandsinformationen des Anwendungskontos empfangen wird (S705);
Löschen der URSP der Anwendung aus der lokalen URSP-Liste basierend auf der URSP-Löschanweisung; und
Stoppen, basierend auf der URSP, eines Verwendens der Netzwerkpartition zum Kommunizieren mit dem Anwendungsserver.

4. Endgerätevorrichtung (110) nach Anspruch 3, wobei die Netzwerkqualitätsinformationen niedriger als ein Netzwerkqualitätsschwellenwert sind.

## Revendications

1. Serveur d'application, le serveur d'application étant associé à un dispositif terminal (110), une application étant installée dans le dispositif terminal (110), et le dispositif terminal (110) pouvant se connecter au serveur d'application en utilisant l'application et un compte d'application ; et le serveur d'application étant configuré pour :
obtenir des premières informations d'état du compte d'application en provenance du dispositif terminal (110), les premières informations d'état comprenant des informations en ligne reçues en provenance du dispositif terminal (110) ou des informations de qualité de réseau du dispositif terminal (110) ;
envoyer une instruction de livraison de politique de sélection de route d'équipement utilisateur, UE, URSP, au dispositif terminal (110) sur la base des premières informations d'état,
l'instruction de livraison URSP ordonnant au dispositif terminal (110) de stocker l'URSP de l'application dans une liste URSP locale, et d'utiliser, sur la base de l'URSP, une tranche de réseau de l'application pour communiquer avec le serveur d'application, et
l'envoi de l'instruction de livraison URSP au dispositif terminal (110) sur la base des premières informations d'état comprenant :
la détermination de l'autorisation d'utilisation URSP du compte d'application sur la base des premières informations d'état (S502) ; et
si l'autorisation d'utilisation URSP est une autorisation disponible, la génération de l'instruction de livraison URSP, et l'envoi de l'instruction de livraison URSP (S503) au dispositif terminal (110) ;
obtenir des deuxièmes informations d'état du compte d'application en provenance du dispositif terminal (110), les deuxièmes informations d'état comprenant des informations de requête hors ligne reçues en provenance du dispositif terminal (110) ; et
envoyer une instruction de suppression URSP au dispositif terminal (110) sur la base des deuxièmes informations d'état,
l"instruction de suppression URSP ordonnant au dispositif terminal (110) de supprimer l'URSP de la liste URSP, et d'arrêter d'utiliser, sur la base de l'URSP, la tranche de réseau pour communiquer avec le serveur d'application, et
l'envoi de l'instruction de suppression URSP au dispositif terminal (110) sur la base des deuxièmes informations d'état comprenant :
la détermination de l'autorisation d'utilisation URSP du compte d'application sur la base des deuxièmes informations d'état (S702) ; et
si l'autorisation d'utilisation URSP est une autorisation indisponible, la génération de l'instruction de suppression URSP (S703) et l'envoi de l'instruction de suppression URSP au dispositif terminal (110).

2. Serveur d'application selon la revendication 1, les informations de qualité de réseau étant inférieures à un seuil de qualité de réseau.

3. Dispositif terminal (110), une application étant installée dans le dispositif terminal (110), et le dispositif terminal (110) pouvant se connecter à un serveur d'application en utilisant l'application et un compte d'application ; et le dispositif terminal (110) étant configuré pour :
envoyer des premières informations d'état au serveur d'application, les premières informations d'état étant des informations en ligne ou des informations de qualité de réseau du dispositif terminal (110) ;
recevoir une instruction de livraison de politique de sélection de route UE URSP, l'instruction de livraison URSP étant reçue en provenance du serveur d'application sur la base des premières informations d'état du compte d'application ;
stocker un URSP de l'application dans une liste URSP locale sur la base de l'instruction de livraison URSP ;
utiliser, sur la base de l'URSP, une tranche de réseau de l'application pour communiquer avec le serveur d'application ;
envoyer des deuxièmes informations d'état au serveur d'application, les deuxièmes informations d'état étant des informations de requête hors ligne ;
recevoir une instruction de suppression URSP, l'instruction de suppression URSP étant reçue en provenance du serveur d'application sur la base des deuxièmes informations d'état du compte d'application (S705) ;
supprimer l'URSP de l'application de la liste URSP locale sur la base de l'instruction de suppression URSP ; et
arrêter l'utilisation, sur la base de l'URSP, de la tranche de réseau pour communiquer avec le serveur d'application.

4. Dispositif terminal (110) selon la revendication 3, les informations de qualité de réseau étant inférieures à un seuil de qualité de réseau.
